(19) Europäisches Patentamt
European Patent Office
Office européen des brevets

(11) **EP 4 460 075 A1**

(12) **EUROPEAN PATENT APPLICATION**
published in accordance with Art. 153(4) EPC

(43) Date of publication:
**06.11.2024 Bulletin 2024/45**

(21) Application number: **23742772.9**

(22) Date of filing: **11.01.2023**

(51) International Patent Classification (IPC):
**H04W 24/02** (2009.01)

(52) Cooperative Patent Classification (CPC):
**G01S 7/00; G01S 7/40; H04W 24/02; H04W 24/10**

(86) International application number:
**PCT/CN2023/071800**

(87) International publication number:
**WO 2023/138457 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2022 CN 202210061984**

(71) Applicant: **Huawei Technologies Co., Ltd.
Shenzhen, Guangdong 518129 (CN)**

(72) Inventors:
• **LI, Yiran
Shenzhen, Guangdong 518129 (CN)**
• **SHAO, Jiafeng
Shenzhen, Guangdong 518129 (CN)**
• **YU, Jian
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **MEASUREMENT REPORTING METHOD AND COMMUNICATION APPARATUS**

(57) This application discloses a measurement reporting method and a communication apparatus. The measurement reporting method includes: A first device determines M types of measurement results for a first signal, and sends N types of measurement results in the M types of measurement results to a second device. The first signal may be used to detect a target object or a spatial channel. The first signal may be an echo signal obtained after a sensing signal sent by the first device is reflected. In the method disclosed in this application, the first device sends the N types of measurement results of the first signal to the second device, and the second device determines some attribute information of the target object or the spatial channel based on the N types of measurement results. This helps evaluate detection performance and estimation performance of a sensing system, to improve performance of the sensing system.

FIG. 4

**Description**

**CROSS-REFERENCE TO RELATED APPLICATIONS**

This application claims priority to Chinese Patent Application No. 202210061984.9, filed with the China National Intellectual Property Administration on January 19, 2022 and entitled "MEASUREMENT REPORTING METHOD AND COMMUNICATION APPARATUS", which is incorporated herein by reference in its entirety.

**TECHNICAL FIELD**

This application relates to the field of communication and sensing technologies, and in particular, to a measurement reporting method and a communication apparatus in a sensing system.

**BACKGROUND**

In wireless sensing, a change of a radio signal in a propagation process is analyzed, to obtain a feature of signal propagation space, and therefore sense a scenario. A radar is a typical means of the wireless sensing. However, a coverage area of the radar is limited. To sense a wide detection range, a large quantity of radars need to be deployed. Considering that a wireless communication system has an advantage of a wide coverage area, the wireless communication system and a wireless sensing system may be integrated.

In the wireless communication system, a performance indicator of the wireless communication system may be measured based on a result of measuring channel state information and interference information by a terminal device. Similar to the wireless communication system, the wireless sensing system has a requirement on measuring sensing performance (for example, target detection performance). Therefore, how to obtain the sensing performance and then evaluate detection performance and estimation performance of the sensing system to further improve performance of the sensing system is a problem that needs to be urgently resolved.

**SUMMARY**

This application provides a measurement reporting method and a communication apparatus, to evaluate detection performance and estimation performance of a sensing system, and therefore improve performance of the sensing system.

According to a first aspect, a measurement reporting method is provided. The method may be performed by a first communication apparatus. The first communication apparatus may be a communication device, or a communication apparatus, for example, a chip system, that can support the communication device in implementing a function needed by the method. The following uses an example in which the communication device is a first device for description. The method includes:

The first device obtains M types of measurement results for a first signal, and sends N types of measurement results in the M types of measurement results to a second device. The first signal may be used to detect a target object or a spatial channel. For example, the first signal may be an echo signal obtained after a detecting signal sent by the first device is reflected. According to this solution, the first device sends the N types of measurement results of the first signal to the second device, and the second device may determine some attribute (or feature) information of the target object or the spatial channel. According to this solution, the attribute information, such as a distance, a speed, and an angle, of the target object in a detection link can be obtained. This helps evaluate detection performance and estimation performance of a sensing system, so that sensing performance of the system can be improved.

In a possible implementation, a measurement result may be classified into a plurality of types, for example, M types of measurement results, based on degrees of processing the first signal. The M types of measurement results may include one or more of the following: a first type of measurement result, a second type of measurement result, a third type of measurement result, or a fourth type of measurement result.

The first type of measurement result includes information about the first signal and/or information about the spatial channel. The information about the spatial channel indicates a feature of the spatial channel corresponding to the first signal. For the first type of measurement result, it may be considered that less processing is performed on the first signal, and therefore there is a low requirement on a processing capability of the first device. When the processing capability of the first device is weak, the first device may report the first type of measurement result to the second device, and indirectly determines an attribute of the target object or the spatial channel by using the second device. In addition, the first type of measurement result carries much information representing the attribute of the target object, so that the second device can determine a more accurate attribute of the target object based on the first type of measurement result.

The second type of measurement result includes one or more of the following: a time domain measurement result, a space domain measurement result, or a frequency domain measurement result. The time domain measurement result may indicate speed information of the target object. The space domain measurement result may indicate angle information of the target object. The frequency domain measurement result may indicate distance information of the target object. For the second type of measurement result, it may be considered that partial processing is performed on the first signal to obtain an intermediate parameter used to determine the attribute of the target object, for example, the time domain measurement result, the space domain measurement result, and the frequency domain measurement result. In comparison with the first type of measurement result, for the second type of measurement result, more processing is performed on the first signal. When the processing capability of the first device is strong, the first device may report the second type of measurement result to the second device, to reduce signal processing load of the second device. In addition, the second type of measurement result has a small amount of data related to the target object and/or the spatial channel, so that overheads for reporting a measurement result can be reduced.

The third type of measurement result includes one or more of the following: a target detection probability, a target false alarm probability, a target missed detection probability, first information, or a channel quality indicator. The target detection probability is a probability of detecting the target object. The target false alarm probability is a probability that a target object that actually does not exist is determined as a target object that exists. The target missed detection probability is a probability that no target object that actually exists is detected. The first information indicates whether the target object is detected. The channel quality indicator indicates channel quality of the spatial channel corresponding to the first signal. Compared with the second type of measurement result, the third type of measurement result may be considered as an intermediate parameter that is obtained based on the second type of measurement result and that is used to determine the attribute of the target object. In addition to representing the attribute of the target object, the third type of measurement result may also represent sensing performance of the first device. The third type of measurement result may provide more reference for the second device, so that the second device can obtain as accurate attribute information of the target object and/or the spatial channel as possible.

The fourth type of measurement result includes one or more of the following: the speed information, the angle information, or the distance information of the target object. A speed, an angle, a distance, and the like of the target object may be considered as the attribute information of the target object. It may also be considered that, compared with the third type of measurement result, the fourth type of measurement result may be considered as a target estimation result obtained by performing more processing on the first signal. It may be understood that, the fourth type of measurement result has a smaller amount of data related to the target object and/or the spatial channel, so that the overheads for reporting the measurement result can be reduced.

In a possible implementation, the first device is a first terminal device, and the second device is a second terminal device or an access network device. Alternatively, the first device is a first access network device, and the second device is a core network device, a second access network device, or a terminal device. Reporting of the measurement result for the first signal may be applied to a plurality of scenarios. For example, the terminal device may send the measurement result for the first signal to the access network device, and the access network device may obtain more accurate attribute information of the target object and/or the spatial channel. For another example, the first terminal device may send the measurement result for the first signal to the second terminal device, in other words, the measurement result for the first signal may be exchanged between the terminal devices. In this way, a plurality of terminal devices may jointly determine the attribute information of the target object more accurately. For still another example, the first access network device may send the measurement result for the first signal to the second access network device. For example, the first access network device that is close to the terminal device may forward the obtained measurement result to the second access network device that is far away from the terminal device, so that the second access network device can determine the attribute information of the target object and/or the spatial channel. Alternatively, for still another example, the access network device may forward the obtained measurement result to the core network device, so that the core network device determines the attribute information of the target object and/or the spatial channel.

In a possible implementation, the method further includes: The first device receives first indication information, where the first indication information indicates a type of a measurement result that needs to be reported, for example, indicates to report the N types of measurement results. According to this solution, the first device needs to send only a measurement result needed by the second device to the second device, and does not need to send all types of measurement results to the second device. This not only meets a requirement of the second device, but also avoids unnecessary overheads for transmitting a measurement result.

In a possible implementation, the method further includes: The first device receives a first request message, and sends a response message. The first request message is used to request to report the measurement result for the first signal, and the response message may include the N types of measurement results. The first device sends the N types of measurement results only under triggering of the first request message. Therefore, a quantity of reported measurement results can be reduced, thereby reducing resource overheads. The

In a possible implementation, the method further includes: The first device sends second indication information to the second device, where the second indication information indicates whether a feedback condition is met. The feedback condition may be considered as a condition that is met for the first device to send the N types of measurement results. The first device may feed back, to the second device, whether the obtained M types of measurement results meet the feedback condition, to assist the second device in determining a specific type of measurement result or specific types of measurement results that are needed.

In a possible implementation, before the first device sends the response message, the method further includes: The first device receives third indication information, where the third indication information is used to trigger reporting of the measurement result. It may be understood that the second device may determine, based on the second indication information, whether the first device needs to report the measurement result. For example, none of the M types of measurement results meets the feedback condition, and for the second device, the M types of measurement results may be useless. In this case, the second device does not indicate the first device to send the measurement result. On the contrary, if the N types of measurement results in the M types of measurement results meet the feedback condition, the second device may indicate the first device to send one or more of the N types of measurement results. In this way, the first device feeds back the measurement result based on an indication of the second device, to avoid reporting an unnecessary measurement result, and therefore reduce the resource overheads.

In a possible implementation, the feedback condition includes that the measurement result is greater than or equal to a reporting threshold. Alternatively, the feedback condition includes that a change rate of the measurement result is within a preset range. The change rate of the measurement result is a difference between an $(i+1)^{th}$ measurement result and an $i^{th}$ measurement result, and i is an integer greater than or equal to 1.

In a possible implementation, the method further includes: The first device receives fourth indication information, where the fourth indication information may indicate the reporting threshold or the change rate of the measurement result, the reporting threshold includes reporting thresholds respectively corresponding to the N types of measurement results, and the change rate of the measurement result includes change rates respectively corresponding to the N types of measurement results. A feedback condition corresponding to each type of measurement result is configured, so that the first device can adaptively adjust the measurement result that needs to be reported, to better meet the requirement of the second device.

According to a second aspect, a measurement reporting method is provided. The method may be performed by a second communication apparatus. The second communication apparatus may be a communication device, or a communication apparatus, for example, a chip system, that can support the communication device in implementing a function needed by the method. The following uses an example in which the communication device is a second device for description. The method includes:

A first device receives N types of measurement results for a first signal, and determines attribute information of a target object or a spatial channel based on the N types of measurement results. The N types of measurement results belong to M types of measurement results for the first signal. The first signal is used to detect the target object or the spatial channel, M and N are positive integers, and N is less than or equal to M.

In a possible implementation, the M types of measurement results include one or more of the following: a first type of measurement result, a second type of measurement result, a third type of measurement result, or a fourth type of measurement result. The first type of measurement result includes information about the first signal and/or information about the spatial channel. The information about the spatial channel indicates a feature of the spatial channel corresponding to the first signal. The second type of measurement result includes one or more of the following: a time domain measurement result, a space domain measurement result, or a frequency domain measurement result. The time domain measurement result indicates speed information of the target object. The space domain measurement result indicates angle information of the target object. The frequency domain measurement result indicates distance information of the target object. The third type of measurement result includes one or more of the following: a target detection probability, a target false alarm probability, a target missed detection probability, first information, or a channel quality indicator. The target detection probability is a probability of detecting the target object. The target false alarm probability is a probability that a target object that actually does not exist is determined as a target object that exists. The target missed detection probability is a probability that no target object that actually exists is detected. The first information indicates whether the target object is detected. The channel quality indicator indicates channel quality of the spatial channel corresponding to the first signal. The fourth type of measurement result includes one or more of the following: the speed information, the angle information, or the distance information of the target object.

In a possible implementation, the first device is a first terminal device, and the second device is a second terminal device or a first access network device. The first device is a first access network device, and the second device is a second access network device, a core network device, or a terminal device.

In a possible implementation, the method further includes: The second device sends first indication information, where the first indication information indicates a type of a measurement result that needs to be reported.

In a possible implementation, the method further includes: The second device sends a first request message, and receives a response message. The first request message is used to request to report the measurement result for the first signal, and the response message includes the N types of measurement results.

In a possible implementation, the method further includes: The second device receives second indication information from the first device, where the second indication information indicates whether a feedback condition is met.

In a possible implementation, before the second device receives a response message, the method further includes: The second device sends third indication information, where the third indication information is used to trigger reporting of the measurement result.

In a possible implementation, the feedback condition includes that the measurement result is greater than or equal to a reporting threshold. Alternatively, the feedback condition includes that a change rate of the measurement result is within a preset range. The change rate of the measurement result is a difference between an $(i+1)^{th}$ measurement result and an $i^{th}$ measurement result, and i is an integer greater than or equal to 1.

In a possible implementation, the method further includes: The second device sends fourth indication information, where the fourth indication information indicates the reporting threshold or the change rate of the measurement result, where the reporting threshold includes reporting thresholds respectively corresponding to the N types of measurement results, and the change rate of the measurement result includes change rates respectively corresponding to the N types of measurement results.

For beneficial effects of the second aspect and the implementations of the second aspect, refer to the descriptions of the first aspect or the beneficial effects of the first aspect and the implementations of the first aspect.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the first device in the first aspect, or the communication apparatus may be an apparatus, for example, a chip or a chip system, that can implement the method provided in the first aspect.

In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the first aspect. For details, refer to the detailed descriptions in the method example. Details are not described herein again.

According to a fourth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the second device in the second aspect, or the communication apparatus may be an apparatus, for example, a chip or a chip system, that can support the second device in the second aspect in implementing a function needed by the method provided in the second aspect.

In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example in the second aspect. For details, refer to the detailed descriptions in the method example. Details are not described herein again.

According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first device in the foregoing method embodiment, or perform the method performed by the second device in the foregoing method embodiment.

According to a sixth aspect, an embodiment of this application provides a communication apparatus. The communication apparatus includes an input/output interface and a logic circuit. The input/output interface is configured to input and/or output information. The logic circuit is configured to perform the method in the first aspect, or the logic circuit is configured to perform the method in the second aspect.

According to a seventh aspect, an embodiment of this application provides a chip system. The chip system includes a processor, and may further include a memory and/or a communication interface, configured to implement the method in the first aspect or the second aspect. In a possible implementation, the chip system further includes the memory, configured to store a computer program. The chip system may include a chip, or may include the chip and another discrete device.

According to an eighth aspect, an embodiment of this application provides a communication system. The communication system includes the communication apparatus in the third aspect and the communication apparatus in

5

the fourth aspect. Alternatively, the communication system includes the communication apparatus in the third aspect and the communication apparatus that is in the fifth aspect and that is configured to perform the method in the second aspect. Alternatively, the communication system includes the communication apparatus in the fourth aspect and the communication apparatus that is in the fifth aspect and that is configured to perform the method in the first aspect.

According to a ninth aspect, this application provides a computer-readable storage medium. The computer-readable storage medium stores a computer program. When the computer program is run, the method in the first aspect or the second aspect is implemented.

According to a tenth aspect, a computer program product is provided. The computer program product includes computer program code. When the computer program code is run, the method in the first aspect or the second aspect is enabled to be performed.

For beneficial effects of the third aspect to the tenth aspect and the implementations of the third aspect to the tenth aspect, refer to the descriptions of the first aspect or the beneficial effects of the first aspect and the implementations of the first aspect.

**BRIEF DESCRIPTION OF DRAWINGS**

FIG. 1 is a diagram of a network architecture to which an embodiment of this application is applicable;
FIG. 2 is a diagram of an active sensing scenario according to an embodiment of this application;
FIG. 3 is a diagram of a passive sensing scenario according to an embodiment of this application;
FIG. 4 is a schematic flowchart of a first measurement reporting method according to an embodiment of this application;
FIG. 5 is a schematic flowchart of a second measurement reporting method according to an embodiment of this application;
FIG. 6 is a diagram of a structure of a communication apparatus according to an embodiment of this application; and
FIG. 7 is a diagram of another structure of a communication apparatus according to an embodiment of this application.

**DESCRIPTION OF EMBODIMENTS**

The technical solutions provided in this application may be applied to various communication systems, for example, a 5th generation (5th generation, 5G) new radio (new radio, NR) system and a long term evolution (long term evolution, LTE) system. The technical solutions provided in this application may also be applied to a future communication system, for example, a 6th generation mobile communication system. The technical solutions provided in this application may also be applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

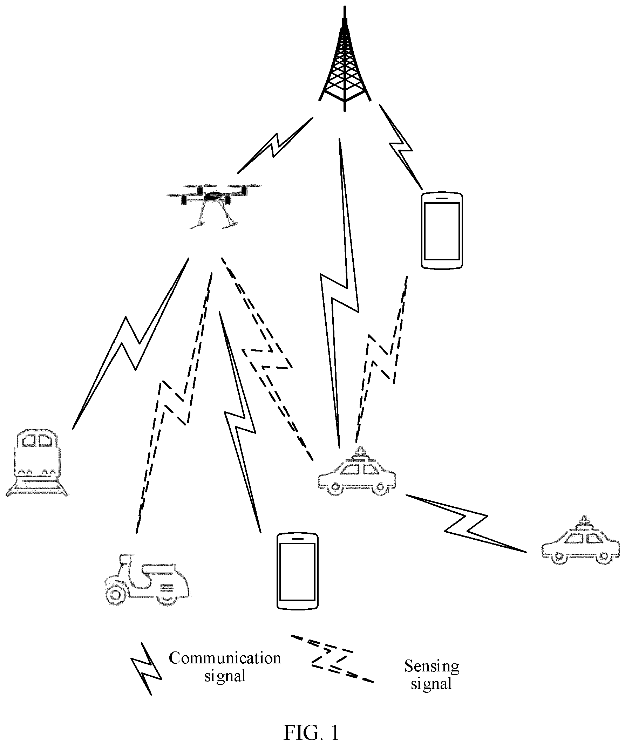

In an example, FIG. 1 is a diagram of an architecture of a communication system to which an embodiment of this application is applicable. The communication system shown in FIG. 1 is a communication system including sensing devices. The sensing device is relative to a common terminal device. The common terminal device does not have a sensing capability, and the sensing device is a terminal device having the sensing capability. The communication system shown in FIG. 1 includes a network device, common terminal devices, and the sensing devices. Further, the communication system may include a core network device.

The network device is an access device, for example, includes a radio access network (radio access network, RAN) device, such as a base station and an access point, used by the terminal device to access the mobile communication system in a wireless manner. The network device may alternatively be a device, for example, another possible terminal apparatus, that communicates with the terminal over an air interface. For another example, in a V2X technology, the network device is a road side unit (road side unit, RSU). The RSU may be a fixed infrastructure entity supporting a V2X application, and may exchange a message with another entity supporting the V2X application. The network device may include an evolved NodeB (evolved NodeB) in an LTE system or long term evolution-advanced (long term evolution-advanced, LTE-A), or may be referred to as an eNB or an e-NodeB for short; or may include a next generation NodeB (next generation NodeB, gNB) in a 5G NR system; or may include an access node in a wireless-fidelity (wireless-fidelity, Wi-Fi) system; or the network device may be a relay station, a vehicle-mounted device, a future evolved public land mobile network (Public Land Mobile Network, PLMN) device, a device in a D2D network, a device in an M2M network, or a device in an IoT network. A specific technology and a specific device form that are used by a wireless network device are not limited in embodiments of this application. For example, the network device in FIG. 1 may be a base station, and corresponds to different devices in different systems. For example, the network device in FIG. 1 may correspond to an eNB in a 4th generation (4th generation, 4G) mobile communication technology system, and correspond to a gNB in a 5G system.

In addition, the base station in embodiments of this application may include a central unit (central unit, CU) and a distributed unit (distributed unit, DU), and a plurality of DUs may be controlled by one CU in a centralized manner. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that, such protocol layer division is only an example, and there may be other protocol layer division. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In the network architecture, the CU is used as a network device on a RAN side. In addition, the CU may be used as a network device on a core network (core network, CN) side. This is not limited in this application.

The core network device includes an access and mobility management function (access and mobility management function, AMF), a user plane function (user plane function, UPF), or the like. It should be noted that the core network device is also a network device. Because embodiments of this application mainly relate to an access network device, unless otherwise specified, the network device below is an access network device.

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used for description.

The terminal device is a device having a wireless transceiver function, and may send a signal to the network device, or receive a signal from the network device. The terminal device may be referred to as user equipment (user equipment, UE), or sometimes may be referred to as a terminal, an access station, a UE station, a remote station, a wireless communication device, a user apparatus, or the like. The terminal device is configured to connect a person, an object, a machine, and the like, and may be widely used in various scenarios. For example, the terminal device includes but not is limited to a terminal device for the following scenarios: cellular communication, D2D, V2X, machine to machine/machine type communication (machine to machine/machine type communication, M2M/MTC), IoT, virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. The terminal device in embodiments of this application may be a mobile phone (mobile phone), a tablet computer (Pad), a computer with a wireless transceiver function, a VR terminal, an AR terminal, a wireless terminal in industrial control (industrial control), a wireless terminal in self driving (self driving), a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. By way of example, and not limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The terminal device may further include a relay (relay). For example, the terminal device may be customer premise equipment (customer premise equipment, CPE). The CPE may receive a signal from the network device, and forward the signal to another terminal device. Alternatively, it is understood that any device that can perform data communication with the base station may be considered as a terminal device. If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on board units (on board units, OBUs). In addition, in embodiments of this application, the terminal device may be an apparatus configured to implement a function of a terminal device, or may be an apparatus, for example, a chip system, that can support the terminal device in implementing the function. The apparatus may be mounted in the terminal device. For example, the terminal device may alternatively be a vehicle detector. In embodiments of this application, the chip system may include a chip, or may include the chip and another discrete device. In the technical solutions provided in embodiments of this application, an example in which the apparatus configured to implement the function of the terminal device is the terminal device is used for description.

The sensing device, also referred to as a detection device or a detector, is an apparatus configured to implement a sensing function, and may also be referred to as a sensing apparatus. For example, the sensing device may be a terminal device having the sensing function. Alternatively, the sensing device may be an apparatus that can support the terminal device in implementing the function, for example, a chip system. For example, the sensing device may be a vehicle detector, a sensor in a gas station, or the like. For example, the sensing device may be an access network device having the sensing function. Alternatively, the sensing device may be an apparatus that can support the access network device in implementing the function, for example, a chip system.

In embodiments of this application, the terminal device includes an apparatus having the sensing function, and may be replaced with the sensing device. Unless otherwise specified, the sensing device and the terminal device below have the same meaning. The sensing device may be mounted on a mobile device, for example, mounted on a motor vehicle (for example, an uncrewed vehicle, a rail vehicle, an electric vehicle, a digital vehicle, or a terminal device shown in FIG. 1), a bicycle, or a speed measurement apparatus. The sensing device may alternatively be mounted on a fixed device, for example, mounted on a device such as an RSU or a signal light. An installation location, a function, and the like of the sensing device are not limited in embodiments of this application. As shown in FIG. 1, an example in which the sensing device is mounted on a signal light or an uncrewed aerial vehicle is used. Both the sensing device and the common terminal device may be terminal devices.

The system shown in FIG. 1 includes a wireless communication system and a wireless sensing system. In other words, the system shown in FIG. 1 can implement both a wireless communication function and a wireless sensing function. For example, the network device and the common terminal device in FIG. 1 may perform wireless communication through a communication signal, and the sensing device in FIG. 1 may sense a sensed target through a sensing signal. It may be understood that the communication signal is relative to the sensing signal, and a signal, for example, a physical downlink shared channel (physical downlink shared channel, PDSCH), communicated between the network device and the common terminal device may be considered as a communication signal. The sensing signal is a signal used to sense a sensed target (or referred to as a target object). The sensing signal is also referred to as a detecting signal, a radar signal, a radar sensing signal, a radar detecting signal, an environment sensing signal, or the like. The sensing signal in embodiments of this application may be a signal, or may be a physical channel. For example, the sensing signal may be a pulse signal, or may be a possible signal in the wireless communication system, for example, a sounding reference signal (sounding reference signal, SRS), a demodulation reference signal (demodulation reference signal, DMRS), or a channel state information reference signal (channel state information reference signal, CSI-RS). For example, the sensing signal may alternatively be the physical channel, for example, a PDSCH, a physical downlink control channel (physical downlink control channel, PDCCH), a physical uplink shared channel (physical uplink shared channel, PUSCH), a physical uplink control channel (physical uplink control channel, PUCCH), a physical random access channel (physical random access channel, PRACH), a physical sidelink shared channel (physical sidelink shared channel, PSSCH), or a physical sidelink control channel (physical sidelink control channel, PSCCH).

The sensing device may sense the target object in an environment. The sensing device may actively sense the target object in the environment, or may passively sense the target object in the environment.

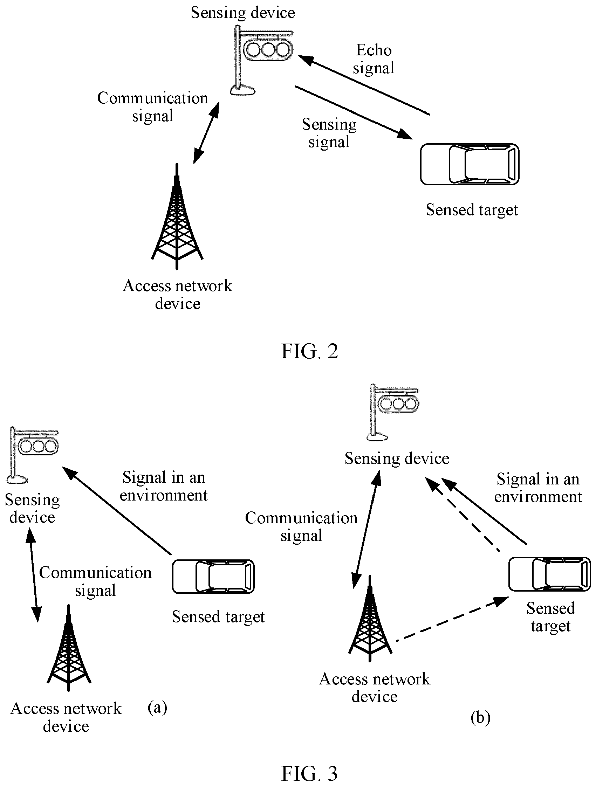

FIG. 2 is a diagram of an active sensing scenario. Active sensing means that a sensing device actively sends a sensing signal, receives a signal (also referred to as an echo signal) obtained after the sensing signal is reflected by a sensed target, and then measures the echo signal. In this way, the sensed target is sensed. In other words, attribute information of the sensed target is determined, for example, a speed, a distance, a shape, and a size of the sensed object. In FIG. 2, an example in which the sensing device is a traffic signal light and the sensed target is a vehicle is used. It may be understood that the sensed target may be a fixed object, for example, a mountain, a forest, or a building, or may be a movable object, for example, a vehicle, an uncrewed aerial vehicle, a pedestrian, or a terminal device. The sensing signal is also referred to as a detecting signal, and sensing the target object may also be referred to as detecting the target object. Unless otherwise specified, in embodiments of this application, sensing and detection may be used interchangeably.

FIG. 3 is a diagram of a passive sensing scenario. Passive sensing means that a sensing device does not actively send a sensing signal, but receives a signal from an environment, and then measures the signal, to sense a target in the environment. The signal in the environment may be a signal sent by another access network device and/or another terminal device. For example, in (a) in FIG. 3, the sensing device is a traffic signal light, the target in the environment is a vehicle, and the sensing device may receive a signal from the vehicle. A signal sent by the vehicle may be considered as the signal in the environment. For another example, in (b) in FIG. 3, the sensing device is a traffic signal light, and the target in the environment is also a vehicle. An access network device may send a signal, and the signal is received by the sensing device after being reflected by the vehicle. It may be considered that a signal in the environment received by the sensing device is a signal obtained after the signal sent by the access network device is reflected by the vehicle. The signal obtained after the signal sent by the access network device is reflected by the vehicle is shown in (b) in FIG. 3 by using a dashed line.

It should be noted that in the scenarios shown in FIG. 2 and FIG. 3, an example in which the sensing device is the traffic signal light and includes one sensing device is used. A quantity and types of sensing devices included in the sensing system are not limited in embodiments of this application. For example, the scenarios shown in FIG. 2 and FIG. 3 may further include more sensing devices. In addition, the wireless communication system and the wireless sensing system may be integrated, so that the ambient environment is sensed while communication is implemented. A system that integrates the wireless communication system and the wireless sensing system is also referred to as an integrated communication and sensing system. For example, the scenario shown in FIG. 2 or FIG. 3 may further include an access network device, a core network device, and the like. As shown in FIG. 2 and FIG. 3, wireless communication is performed between the access network device and the traffic signal light, and the traffic signal light may sense the vehicle. Different sensing devices may have different detection performance for the sensed target, and a same sensing device may have different detection performance for the sensed target under different conditions. The detection performance may also be referred to as sensing performance or target estimation performance. The detection performance of the sensing device for the sensed target may also be considered as detection performance of a system including the sensing device for the sensed target. In the integrated communication and sensing system, sensing performance of one or more sensing devices and sensing performance of the entire system need to be measured. How to obtain the sensing performance of the sensing system is a problem that needs to be resolved.

In view of this, solutions in embodiments of this application are provided. In the solutions provided in this application, a sensing device may measure a received signal to obtain a measurement result, and report the measurement result to another device, for example, an access network device. The access network device may determine attribute information of a sensed target based on the measurement result of the sensing device, and may determine sensing performance of the sensing device or an integrated communication and sensing system by using the attribute information of the sensed target. This helps improve the sensing performance of the integrated communication and sensing system. Further, the measurement result for the signal may be classified into a plurality of types, and the sensing device may adaptively report one or more types of measurement results, to meet an actual reporting requirement.

The following describes in detail the solutions provided in embodiments of this application with reference to the accompanying drawings. In the following description process, an example in which the method is applied to the system shown in FIG. 1 is used. In addition, the method may be performed by two communication apparatuses. The two communication apparatuses are, for example, a first communication apparatus and a second communication apparatus. The first communication apparatus is an apparatus for sending a measurement result, and the second communication apparatus is an apparatus for receiving the measurement result. For example, the first communication apparatus may be a terminal device having a sensing capability or a communication apparatus that can support the terminal device in implementing a function needed by the method, or certainly may be another communication apparatus, for example, a chip system. The second communication apparatus may be a network device or a communication apparatus that can support the network device in implementing a function needed by the method, or certainly may be another communication apparatus, for example, a chip system. Alternatively, the second communication apparatus may be a terminal device or a communication apparatus that can support the terminal device in implementing a function needed by the method, or certainly may be another communication apparatus, for example, a chip system. The first communication apparatus and the second communication apparatus may be different in different examples, and are specifically described below.

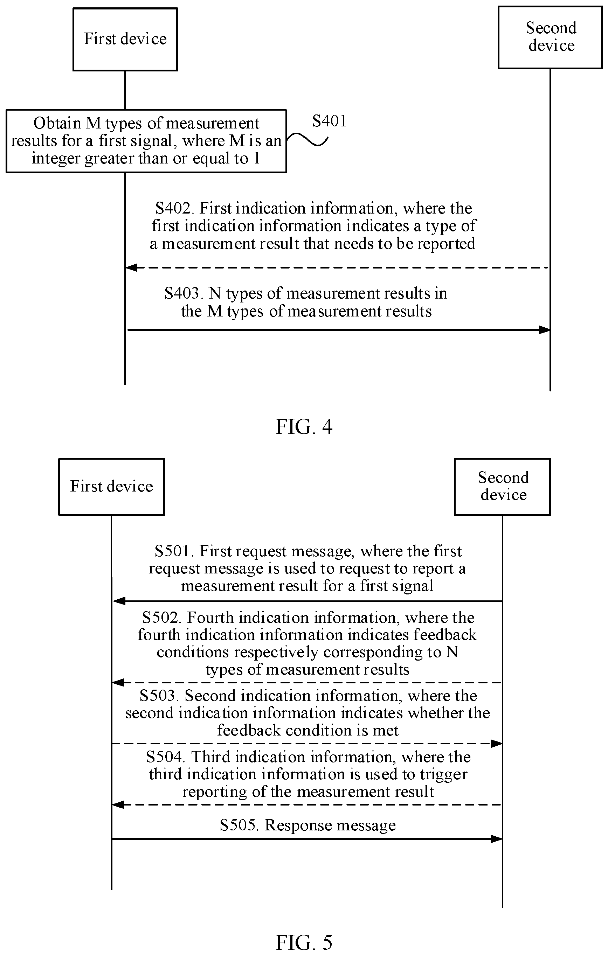

FIG. 4 is a schematic flowchart of a measurement reporting method according to an embodiment of this application. In FIG. 4, an example in which the method is performed by a first device and a second device is used for description. If this embodiment of this application is applied to the network architecture shown in FIG. 1, the first device described below may be the terminal device in the network architecture shown in FIG. 1, and the second device described below may be the access network device or another terminal device in the network architecture shown in FIG. 1. Alternatively, the first device may be the access network device in the network architecture shown in FIG. 1, and the second device may be an access network device or a core network device. An optional step, namely, a step that is not mandatory, is shown in FIG. 4 by using a dashed line.

S401. The first device obtains M types of measurement results for a first signal, where M is an integer greater than or equal to 1.

The first signal may be used for detection. For example, the first signal may be used to detect a channel, or it may be understood that the first signal may be used to detect a spatial channel. For another example, the first signal may be used to detect a sensed target (which is also referred to as a target object in this specification). For ease of description, an example in which the first signal is used to detect the target object is used in this embodiment of this application. It may also be considered that the first signal is a signal used to determine attribute information of the target object. For example, the first device is a device having a sensing function and is configured to sense the target object. The first device may actively sense the target object, or may passively sense the target object. In an active sensing scenario, the first signal may include an echo signal of a sensing signal sent by the first device. For example, the access network device may configure, for the first device, a resource used to send the sensing signal. The first device sends the sensing signal on the resource, and receives the echo signal of the sensing signal. In a passive sensing scenario, the first signal may include a signal from an environment. For example, the first signal may include a signal sent by the target object, or may include a signal reflected by the target object.

The first device receives the first signal and then measures the first signal, to obtain a measurement result. The measurement result may be used to determine the attribute information of the target object, for example, information such as a speed, an angle, and a distance of the target object. In this embodiment of this application, the measurement result may be classified into a plurality of types based on degrees of processing the first signal. For example, the measurement result may be classified into four types in ascending order of the degrees of processing the first signal. The four types of measurement results are respectively a first type of measurement result, a second type of measurement result, a third type of measurement result, and a fourth type of measurement result. Certainly, a quantity of types of measurement results is not limited in this embodiment of this application, and there may be more types of measurement results. Any type of measurement result in the four types of measurement results may also be used to detect a feature of the channel, for example, detect quality of the spatial channel corresponding to the first signal. Any type of measurement result in the four types of measurement results may be used to determine the attribute information of the target object, and the attribute information of the target object may include the information such as the speed, the angle, or the distance of the target object.

Speed information of the target object includes a speed value of the target object. The speed value may represent a movement direction of the target object. For example, a reference direction is predefined by using a predefined two-dimensional coordinate system as a reference. If the target object moves along the reference direction, the speed value is a positive number. If the target object moves along a reverse direction of the reference direction, the speed value is a negative number. Certainly, if the target object is in a static state, the speed value is 0. Angle information of the target object may include an estimated azimuth and an estimated vertical angle of the target object relative to the reference direction. The reference direction may be a direction in which a transmit antenna of a sensing device is located. Distance information of the target object may include a distance of the target object relative to a reference point in the two-dimensional coordinate system or a three-dimensional coordinate system. The reference point may be a predefined location.

The following sequentially describes the four types of measurement results in this embodiment of this application.

The first type of measurement result may be a result obtained by performing partial processing on the first signal. For example, the first type of measurement result includes real-part data information and imaginary-part data information that are obtained by quantizing the first signal. The first signal may be determined based on the real-part data information and the imaginary-part data information that are obtained by quantizing the first signal. Therefore, the real-part data information and the imaginary-part data information that are obtained by quantizing the first signal may also be understood as information about the first signal. For another example, the first type of measurement result may include information representing a feature of the spatial channel corresponding to the first signal. The information is referred to as information about the spatial channel. A specific implementation of the information about the spatial channel is not limited in this embodiment of this application. For example, for the active sensing scenario, the information about the spatial channel may be a result obtained by performing frequency-domain autocorrelation on a conjugate of the first signal and a reference signal sent by the first device. After obtaining the information about the spatial channel, the second device may determine the attribute information of the target object based on the information about the spatial channel. For the passive sensing scenario, the information about the spatial channel may be a time domain channel impulse response value and/or a frequency domain channel impulse response value that are/is obtained by performing channel estimation by the first device and that are/is at a time-frequency resource location of a signal used for target sensing. It may be understood that a channel impulse response is an output signal obtained after a unit pulse signal passes through the channel, and may represent a basic feature of the channel. After obtaining the information about the spatial channel, the second device may determine the attribute information of the target object based on the information about the spatial channel. It should be noted that the first type of measurement result may alternatively include the information about the first signal and information about the channel.

It may be understood that the first type of measurement result is a result obtained by performing no processing or performing a small amount of processing on the first signal. Therefore, the first type of measurement result carries most information representing an attribute of the target object, and in this case, the second device may estimate more attribute information that is accurate and that is of the target object based on the first type of measurement result. In addition, the first type of measurement result has a low requirement on a processing capability of the first device. In other words, if the processing capability of the first device is low, the first device may determine the first type of measurement result.

Compared with the first type of measurement result, the second type of measurement result is a measurement result obtained by performing more processing on the first signal. The second type of measurement result may include an intermediate parameter used to determine the attribute information of the target object. For example, the second type of measurement result may include an intermediate parameter representing the speed information of the target object. For another example, the second type of measurement result may also include an intermediate parameter representing the angle information of the target object, an intermediate parameter representing the distance information of the target object, or the like. For ease of description, in this specification, the intermediate parameter representing the speed information of the target object is referred to as a time domain measurement result, the intermediate parameter representing the angle information of the target object is referred to as a space domain measurement result, and the intermediate parameter representing the distance information of the target object is referred to as a frequency domain measurement result. The second type of measurement result may include one or more of the following: the time domain measurement result, the space domain measurement result, or the frequency domain measurement result. For example, the second type of measurement result may include the time domain measurement result and the frequency domain measurement result, which are also referred to as a time domain-frequency domain measurement result.

Specifically, the first device processes the first signal received in a first measurement window, to obtain the second type of measurement result. The first measurement window may be one measurement window, or may be a plurality of measurement windows. The measurement window may be determined based on a time domain length occupied by the first signal. For example, the measurement window may be a time domain length of the first signal the first device collects when performing sensing processing once. Alternatively, the measurement window may be a periodicity in which the first device performs sensing processing. For example, the first device processes the first signal once every other measurement window. A size and a time unit of the measurement window are not limited in this embodiment of this application. For example, a time domain length to which the measurement window may correspond is in a unit of slot, symbol, or time. For example, a length of the measurement window is 5 ms, or 100 symbols, or five slots. In a possible implementation, the size of the measurement window may be predefined, preconfigured, or configured by the access network device. For example, a candidate set of the size of the measurement window is predefined, and the candidate set includes a plurality of pieces of duration. The access network device may select one or more pieces of duration from the candidate set and configure the duration for the first device. This is more flexible. When the first measurement window includes the plurality of measurement windows, sizes of the plurality of measurement windows may be the same or may be different. For example, the first measurement window includes three measurement windows, and time domain lengths corresponding to the three measurement windows are respectively 5 ms, 1 0 ms, and 50 ms. Alternatively, time domain lengths corresponding to the three measurement windows are respectively 100 symbols, 200 symbols, and 250 symbols.

For example, the first measurement window is one measurement window, and a size of the measurement window is 10 ms. The second type of measurement result may include a time domain-frequency domain measurement result obtained by the first device in the measurement window of 10 ms. For example, N time points are collected in the first measurement window of 10 ms, and M frequency points are collected in the first measurement window, to obtain a two-dimensional data matrix of M×N. The two-dimensional data matrix of M×N is the second type of measurement result. It may be understood that M represents a quantity of sampling points in time domain, where each sampling point represents a distance value; and N represents a quantity of sampling points in a time dimension, where each sampling point represents a speed value. A result of each element in the two-dimensional data matrix of M×N corresponds to a distance-speed value pair.

Alternatively, the second type of measurement result may include information about some sampling points obtained by performing sampling after the first signal is processed. For example, the second type of measurement result may include two-dimensional location coordinate information (x, y) of the sampling point. In (x, y), x represents a distance from the sampling point to an X-axis of the two-dimensional coordinate system, and y represents a distance from the sampling point to a Y-axis of the two-dimensional coordinate system. It may be understood that the sampling point may be a sampling point that meets a detection threshold. A coordinate origin and coordinate axes (X and Y) of the two-dimensional coordinate system may be predefined. For example, it may be predefined that a location of the first device is used as the coordinate origin of the two-dimensional coordinate system, the due east direction is used as an X-axis direction, and the due north direction is used as a Y-axis direction. Alternatively, the two-dimensional coordinate system may be determined based on relative locations of the second device and the first device. This is not limited in this embodiment of this application. The information about the sampling point may further include speed information and angle information corresponding to the sampling point. This is not limited in this application.

Alternatively, the second type of measurement result may include three-dimensional location coordinate information (x, y, z) of some sampling points obtained by performing sampling after the first signal is processed. x represents a distance from the sampling point of the target object to an X-axis of the three-dimensional coordinate system, y represents a distance from the sampling point of the target object to a Y-axis of the three-dimensional coordinate system, and z represents a distance from the sampling point of the target object to a Z-axis of the three-dimensional coordinate system. A coordinate origin and coordinate axes (X, Y, and Z) of the three-dimensional coordinate system may be predefined. For example, it may be predefined that a location of the first device is used as the coordinate origin of the three-dimensional coordinate system, the due east direction is used as an X-axis direction, and the due north direction is used as a Y-axis direction. Alternatively, the three-dimensional coordinate system may be determined based on relative locations of the second device and the first device. This is not limited in this embodiment of this application.

The third type of measurement result may be considered as a measurement result obtained by further processing the first signal based on the second type of measurement result. For example, the third type of measurement result may include one or more of the following: a target detection probability, a target false alarm probability, a target missed detection probability, first information, or a channel quality indicator.

The target detection probability is a probability of detecting the target object. For example, the first device may determine the target detection probability based on sensing results obtained through a plurality of times of sensing measurement. For example, the first device performs sensing detection P times in a time period, and detects existence of the target object Q times in the P times. In this case, the target detection probability is Q/P. It may be understood that, Q is less than or equal to P, and the sensing detection may be understood as that the first device obtains target information in a sensing link by measuring and processing the received first signal. Alternatively, correspondences between some parameters and the target detection probability, for example, a correspondence between a signal-to-noise ratio (signal-to-noise ratio, SNR) of a signal and the target detection probability, may be predefined. In this case, the first device may determine the target detection probability based on an SNR of the received first signal and a correspondence between the SNR and the target detection probability. A manner of determining the target detection probability is not limited in this application.

Similarly, the target false alarm probability is a probability that a target that actually does not exist in a detection environment is determined as the target object. For example, the first device may determine the target false alarm probability based on sensing results obtained through a plurality of times of sensing measurement. For example, the first device performs sensing detection P times in a time period, and determines, Q times in the P times, a target object that does not exist as a target object that exists. In this case, the target false alarm probability is Q/P. It may be understood that Q is less than or equal to P. Alternatively, the target false alarm probability may be considered as a performance indicator of the first device, and the target false alarm probability may be determined in advance by using a means such as an experiment and/or correspondences between some parameters and the target false alarm probability. A manner of determining the target false alarm probability is not limited in this application.

The target missed detection probability is a probability that no target object that actually exists is detected in the detection environment. For example, the first device performs sensing detection P times in a time period, and does not detect, Q times in the P times, the target object that actually exists. In this case, the target missed alarm probability is Q/P. It may be understood that Q is less than or equal to P. Similarly, the target missed detection probability may alternatively be considered as a performance indicator of the first device, and the target missed detection probability may be determined in advance by using a means such as an experiment and/or correspondences between some parameters and the target missed detection probability. A manner of determining the target missed detection probability is not limited in this application.

The first information indicates whether the target object is detected. For example, the first device performs sensing detection N times in a time period, and measurement results obtained through P times of measurement all indicate that no target object exists. In this case, the first information indicates that no target object is detected. On the contrary, if measurement results obtained through Q times of measurement indicate that the target object exists, the first information indicates that the target object is detected. It may be understood that Q is less than or equal to P, and a value of Q may be predefined or configured. Alternatively, the first information may separately indicate a result of whether the target object is detected at an $n^{th}$ time in P times of sensing detection, where n is greater than or equal to 1 and less than or equal to P.

The channel quality indicator may indicate the quality of the spatial channel corresponding to the first signal. A higher channel quality level indicates better sensing performance. In this embodiment of this application, the channel quality may be determined based on the SNR. For example, the channel quality may be classified into a plurality of levels based on a degree to which the channel quality changes with the SNR. For example, the target detection probability may be divided at an interval of 0.1. Different target detection probability ranges correspond to different SNR ranges. Each SNR range may correspond to a channel quality level. The first device may determine the corresponding channel quality based on the SNR of the first signal and a correspondence.

It may be understood that, compared with the second type of measurement result, the third type of measurement result has a smaller amount of data, so that resource overheads for sending the measurement result by the first device can be further reduced. In addition, it may be considered that the third type of measurement result may represent sensing performance of the first device. The second device may determine the sensing performance of the first device based on the third type of measurement result. Further, the second device may adjust some parameters of the first device based on the third type of measurement result, to improve the sensing performance of the first device. For example, the second device may adjust transmit power and/or a beam sweeping order of the first device, to increase the target detection probability of the first device as much as possible.

The fourth type of measurement result may be considered as a sensing result that is of the target object and that is determined by the first device based on the first signal. For example, the fourth type of measurement result includes one or more of the following: the speed information, the angle information, or the distance information of the target object. For another example, the fourth type of measurement result may further include results such as a contour, a movement path, and imaging of the target object. The fourth type of measurement result has a smaller amount of data, so that the resource overheads for sending the measurement result by the first device can be further reduced.

From the first type of measurement result to the fourth type of measurement result, an amount of data of the measurement result gradually decreases, and a requirement on the processing capability of the first device gradually increases. The first device may adaptively send one or more types of measurement results in the first type of measurement result to the fourth type of measurement result to the second device based on the processing capability of the first device. In this way, the resource overheads for reporting the measurement result are reduced as much as possible within a processing capability range of the first device.

It should be noted that in this embodiment of this application, that there are four types of measurement results is used as an example, and the quantity of types of measurement results is not limited in this embodiment of this application. In addition, each type of measurement result may include a plurality of sub-measurement results, or may be considered as a type of measurement result. For example, the information about the first signal in the first type of measurement result may be considered as a type of sub-measurement result. For another example, the target detection probability in the third type of measurement result may be considered as a type of sub-measurement result. Types and a quantity of sub-measurement results included in each type of measurement result are not limited in this embodiment of this application.

S402. The second device sends first indication information to the first device, where the first indication information indicates a type of a measurement result that needs to be reported.

The second device may indicate the first device to report a specific type of measurement result or specific types of measurement results. For example, the second device may enable, based on an actual requirement of a sensing scenario, the first device to report N types of measurement results. This avoids a case in which the first device reports an unnecessary measurement result, to reduce the resource overheads, and can also meet an actual requirement of the second device as much as possible.

Specifically, the second device may send the first indication information to the first device, and correspondingly, the first device receives the first indication information from the second device. The first indication information indicates the type of the measurement result that needs to be reported by the first device, namely, a type corresponding to the N types of measurement results. An implementation of the first indication information varies with the first device and the second device. For example, the first device is a first terminal device, the second device is a second terminal device, and the first indication information may be carried in sidelink information, for example, sidelink control information (sidelink control information, SCI). The first device is a first terminal device, the second device is a first access network device, and the first indication information may be carried in one or more fields in radio resource control (radio resource control, RRC) signaling, media access control control element (media access control control element, MAC CE) signaling, downlink control information (downlink control information, DCI) signaling, or the like. The one or more fields may be a field defined in the RRC signaling, a field defined in the MAC CE signaling, or a field defined in the DCI signaling, or may be a newly defined RRC field, MAC CE field, or DCI field. This is not limited in this embodiment of this application. Certainly, the first indication information may alternatively be carried in newly defined signaling.

In a possible implementation, the second device may configure configuration information used by the first device to report the measurement result. For example, the configuration information may indicate the first device to send a time-frequency resource occupied by the first signal. For example, the configuration information includes an identity (identity, ID) of a resource set, to indicate a resource that is allocated to the first device and that is used to send or receive the first signal. Specifically, an implementation in which the configuration information indicates the time-frequency resource occupied by the first signal is not limited in this embodiment of this application. The configuration information may further indicate a manner in which the first device reports the measurement result, for example, indicate the first device to periodically report the measurement result, aperiodically report the measurement result, or report the measurement result in a semi-static manner. The first indication information may be used as an information element of the configuration information. Optionally, the configuration information may be preconfigured for the first device.

The following uses an example in which the second device indicates the first device to report the N types of measurement results in the M types of measurement results to describe how the second device indicates the first device to report the measurement result. The M types of measurement results may be predefined or preconfigured, or the M types of measurement results may be indicated by the second device by using signaling. For example, the second device may configure a type of the M types of measurement results by using RRC signaling or DCI signaling. For example, the M types of measurement results include the first type of measurement result and the second type of measurement result; or the M types of measurement results include the first type of measurement result and the third type of measurement result; or the M types of measurement results include the first type of measurement result and the fourth type of measurement result; or the M types of measurement results include the second type of measurement result and the third type of measurement result; or the M types of measurement results include the second type of measurement result and the fourth type of measurement result; or the M types of measurement results include the third type of measurement result

and the fourth type of measurement result. For another example, the M types of measurement results include the first type of measurement result, the second type of measurement result, and the third type of measurement result; or the M types of measurement results include the first type of measurement result, the second type of measurement result, and the fourth type of measurement result; or the M types of measurement results include the second type of measurement result, the third type of measurement result, and the fourth type of measurement result. For another example, the M types of measurement results include the first type of measurement result, the second type of measurement result, the third type of measurement result, and the fourth type of measurement result.

That the first indication information indicates that the first device needs to report the N types of measurement results in the M types of measurement results includes the following two possible indication manners.

First indication manner: The second device may indicate, in a bit status indication manner, the type of the measurement result reported by the first device. In this indication manner, a quantity of bits occupied by the first indication information may be $\left\lceil \log_2^{(M)} \right\rceil$, where $\lceil \ \rceil$ represents a ceiling operation, and M pieces of bit status information are in one-to-one correspondence with the M types of measurement results.

For example, M=2, and the M types of measurement results include the first type of measurement result and the second type of measurement result. The first indication information may occupy one bit, a status of the bit being "0" may indicate the first type of measurement result, and the status of the bit being "1" may indicate the second type of measurement result. Alternatively, a status of the bit being "1" may indicate the first type os measurement result, and the status of the bit being "0" may indicate the second type of measurement result. For example, M=3, and the M types of measurement results include the first type of measurement result, the second type of measurement result, and the third type of measurement result. The first indication information may occupy at least two bits. For example, for specific indication content of the first indication information, refer to Table 1.

Table 1

| Bit status of the first indication information | Indication content |
|---|---|
| 00 | First type of measurement result |
| 01 | Second type of measurement result |
| 10 | Third type of measurement result |
| 11 | Reserved or used for another indication |

Second indication manner: The second device indicates, in a bitmap (bitmap) manner, the type of the measurement result reported by the first device. In this indication manner, a quantity of bits occupied by the first indication information may be M. For example, a measurement result corresponds to a bit location 0, representing that the type of measurement result needs to be reported; and correspondingly, the measurement result corresponds to a bit location 1, representing that the type of measurement result does not need to be reported. Alternatively, a measurement result corresponds to a bit location 1, representing that the type of measurement result needs to be reported; and correspondingly, the measurement result corresponds to a bit location 0, representing that the type of measurement result does not need to be reported.

For example, M=3, and the three types of measurement results include the first type of measurement result, the second type of measurement result, and the third type of measurement result. The first indication information occupies three bits, which are in one-to-one correspondence with the first type of measurement result, the second type of measurement result, and the third type of measurement result from a low-order bit to a high-order bit. For indication content of the first indication information, refer to Table 2. For example, in Table 2, the bit location 1 represents the measurement result that needs to be reported.

Table 2

| First indication information | Indication content |
|---|---|
| 001 | First type of measurement result |
| 010 | Second type of measurement result |
| 100 | Third type of measurement result |
| 011 | First type of measurement result and the second type of measurement result |

(continued)

| First indication information | Indication content |
| --- | --- |
| 110 | Second type of measurement result and the third type of measurement result |
| 101 | First type of measurement result and the third type of measurement result |
| 111 | First type of measurement result, the second type of measurement result, and the third type of measurement result |

Optionally, for each type of measurement result, the second device may further indicate the first device to report a specific type sub-measurement result or specific types of sub-measurement results in the type of measurement result. For example, a set of the type of the sub-measurement result included in each type of measurement result may be preconfigured. The first indication information may further indicate an index of a type of a sub-measurement result that needs to be reported in a type of measurement result to which the type of sub-measurement result belongs. For example, the first indication information may include a first indication and a second indication, where the first indication may indicate the type of the measurement result that needs to be reported, and the second indication may indicate the index of the type of the sub-measurement result that needs to be reported in the type of measurement result to which the type of the sub-measurement result belongs.

For example, the first indication information indicates the N types of measurement results in the first indication manner. In this case, the first indication may include at least one bit status, and different bit statuses correspond to different types of measurement results. The second indication may occupy at least one bit, and different bit statuses correspond to different types of sub-measurement results. Alternatively, the second indication may include at least one bitmap, and the at least one bitmap is in one-to-one correspondence with a quantity of types indicated by the first indication. In bits occupied by one bitmap, a bit location corresponding to the type of the sub-measurement result that needs to be reported is 0 or 1.

For example, the second device needs the first device to report the fourth type of measurement result, and the fourth type of measurement result includes four types of sub-measurement results {distance, speed, angle, and path}. It is assumed that there are four types of measurement results. The first indication occupies two bits. A value of the two bits being "11" indicates that a measurement result that needs to be reported is the fourth type of measurement result. The second indication may occupy two bits. A value of the two bits being "00" indicates distance information in the fourth type of measurement result. A value of the two bits being "01" indicates speed information in the fourth type of measurement result. Alternatively, the second indication may be one bitmap, and the bitmap occupies four bits. The four bits being "0101" indicates that distance information and path information need to be reported. The four bits being "0011" indicates that angle information and path information need to be reported.

For example, the first indication information indicates the N types of measurement results in the second indication manner. In this case, the first indication includes at least one bitmap, and the at least one bitmap is in one-to-one correspondence with the preconfigured M types of measurement results. The second indication includes at least one piece of bit status information, and different bit statuses correspond to different types of sub-measurement results. Alternatively, the second indication may be at least one bitmap, and the at least one bitmap is in one-to-one correspondence with a quantity of types indicated by the first indication. In bits occupied by one bitmap, a bit location corresponding to the type of the sub-measurement result that needs to be reported is 0 or 1.

The foregoing example is still used, the second device needs the first device to report the fourth type of measurement result, and the fourth type of measurement result includes four types of sub-measurement results {distance, speed, angle, and path}. It is assumed that there are four types of measurement results. The first indication may be one bitmap, and the bitmap occupies four bits. The four bits being "0001" indicates that a measurement result that needs to be reported is the fourth type of measurement result. The second indication may occupy two bits. A value of the two bits being "00" indicates distance information in the fourth type of measurement result. A value of the two bits being "01" indicates speed information in the fourth type of measurement result. Alternatively, the second indication may be one bitmap, and the bitmap occupies four bits. The four bits being "0101" indicates that distance information and path information need to be reported. The four bits being "0011" indicates that angle information and path information need to be reported.

It should be noted that the first indication and the second indication may be carried in a same piece of signaling, for example, RRC signaling or DCI signaling. Alternatively, the first indication may be carried in RRC signaling, and the second indication may be carried in DCI signaling.

In this embodiment of this application, a measurement result for the first signal may include the M types of measurement results. The different types of measurement results include different amounts of data. For example, compared with the fourth type of measurement result, an amount of data of the first type of measurement result is larger. To reduce the overheads for reporting the measurement result by the first device, the first device may send the N types of measurement results in the M types of measurement results to the second device, in other words, the first device does not need to report all types of measurement results to the second device. Similarly, for each type of measurement result, the plurality of sub-measurement results may be included, and the first device may report some sub-measurement results of the type of measurement result to the second device, to reduce the overheads for reporting the measurement result as much as possible.

Optionally, the second device may configure a type of the measurement result by using RRC signaling, for example, M types, and indicate, by using RRC signaling or DCI signaling, the type of the measurement result that needs to be reported by the first device, for example, N types. For example, the first indication information may be carried in the RRC signaling or the DCI signaling. For another example, the first indication is carried in the RRC signaling, and the second indication is carried in the DCI signaling.

Optionally, the second device may indicate, by using RRC signaling or DCI signaling, the type of the measurement result that needs to be reported by the first device, for example, N types. For example, the first indication information may be carried in the RRC signaling or the DCI signaling.

Optionally, a type of the measurement result may be predefined or preconfigured, and the type of the measurement result that needs to be reported by the first device is indicated by using DCI signaling. For example, the first indication information may be carried in the DCI signaling. For another example, the first indication is carried in the RRC signaling, and the second indication is carried in the DCI signaling.

In the foregoing, the second device indicates, by using the first indication information, the type of the measurement result that needs to be reported by the first device. In an alternative solution, the type of the measurement result that needs to be reported by the first device may be predefined or preconfigured. For example, reporting of the first type of measurement result is predefined, and the first device may send the first type of measurement result to the second device. Similarly, for the sub-measurement results of each type of measurement result, reporting of the specific type of sub-measurement result or the specific types of sub-measurement results may be predefined or preconfigured. Therefore, S403 is not a mandatory step, and is therefore shown by using the dashed line.

Optionally, the type of the measurement result that needs to be reported by the first device may be predefined or preconfigured, and the first indication information indicates whether the first device reports a predefined or preconfigured measurement result. The first device receives the first indication information, and may determine, based on the first indication information, whether to report the measurement result of a predefined or preconfigured type.

Optionally, the type of the measurement result that needs to be reported by the first device may be predefined or preconfigured, and the first indication information indicates the first device to report the predefined or preconfigured measurement result. The first device receives the first indication information, and reports the predefined or preconfigured measurement result to the second device. If the first device does not receive the first indication information, it may be considered that reporting of the measurement result is not needed, in other words, the first device does not send the measurement result to the second device.

S403. The first device sends the N types of measurement results in the M types of measurement results to the second device, where N is less than or equal to M.

The first device may quantize each type of measurement result in the N types of measurement results, and send information obtained by quantizing each type of measurement result to the second device. For example, the first device may send a measurement report to the second device, where the measurement report includes the information obtained by quantizing each type of measurement result in the N types of measurement results, and the information indicates the N types of measurement results.

For the first type of measurement result, the first device may correspondingly quantize the first type of measurement result into real-part information and imaginary-part information. Q bits need to be occupied to quantize the first type of measurement result, and a value range of Q may be [1, 4096]. For example, an information element (for example, MeasResultSENSE IE) may be included in the measurement report, where the information element indicates the first type of measurement result. An implementation of the information element may be as follows:

```
MeasResultSENSE ::=           SEQUENCE {
sense-ResourceId              SENSE-ResourceId,
sense-Result-channel-real          BIT STRING (SIZE (Q)),
sense-Result-channel-imag          BIT STRING (SIZE (Q)),
     }
```

For the second type of measurement result, the first device may correspondingly quantize the second type of measurement result obtained in one or more first measurement windows into one or more of the following: real-part information, imaginary-part information, and amplitude information. The amplitude information may be considered as a square sum of the real-part information and the imaginary-part information included in information obtained by quantizing the second type of measurement result, or a result obtained by calculating a square root of the square sum of the real-part information and the imaginary-part information.

Alternatively, the first device may correspondingly quantize the second type of measurement result into two-dimensional or three-dimensional location coordinates of the sampling point of the target object. Alternatively, the first device may correspondingly quantize the second type of measurement result into an index of two-dimensional or three-dimensional location coordinates of the sampling point of the target object. The sampling point of the target object may be a sampling point whose power is greater than a preset threshold. For example, an information element (for example, MeasResultSENSE IE) may be included in the measurement report, where the information element indicates the second type of measurement result. An implementation of the information element may be as follows:

```
MeasResultSENSE-TypeB ::=          SEQUENCE {

sense-Result-RV-idx                BIT STRING (SIZE (Q)),

sense-Result-FFTsize-R                  INTEGER (A..B),

sense-Result-FFTsize-V                  INTEGER (A1..B1),

}
```

For the third type of measurement result, the first device may send a set of measurement sub-results included in the third type of measurement result to the second device. For example, the first device sends a target detection probability {0, 0.1, ..., 0.9, 1.0} and indication information to the second device, where the indication information may indicate the target detection probability included in the third type of measurement result. For example, the indication information is one bitmap, and a bit location corresponding to the target detection probability is 0 or 1. For another example, the first device may send first information occupying one bit to the second device, to indicate whether the target object is detected. For another example, the first device may send a target detection quantity to the second device. For still another example, the first device may send the channel quality indicator to the second device. For example, an information element (for example, MeasResultSENSE IE) may be included in the measurement report, where the information element indicates the channel quality. An implementation of the information element may be as follows:

```
MeasResultSENSE ::=          SEQUENCE {

sense-ResourceId                  SENSE-ResourceId,

sense-Result-deteProb        ENUMERATED {Prob0, Prob01, ...Prob09, Prob1}

sense-Result-Targetnum            INTEGER (X2..Y2)

sense-Result-deteresult        ENUMERATED {true, false}

}
```

For the fourth type of measurement result, the first device may send information obtained by quantizing the fourth type of measurement result to the second device. For example, the distance information included in the fourth type of measurement result has a plurality of values. For example, a distance information set is {10, 20, 30, ..., 500}, in other words, includes 50 distance values. The first device may send indication information to the second device, where the indication information occupies, for example, nine bits, statuses of the nine bits correspond to the 50 index values in the distance information set, and the distance information in the fourth type of measurement result is indicated by using the statuses of the nine bits. Alternatively, the indication information may be a bitmap with a length of 50 bits, and the distance in the fourth type of measurement result is indicated by using the bitmap. For example, an information element (for example, MeasResultSENSE IE) may be included in the measurement report, where the information element indicates the fourth type of measurement result. An implementation of the information element may be as follows:

```
MeasResultSENSE ::=        SEQUENCE {

sense-ResourceId           SENSE-ResourceId,

sense-Result-distance         INTEGER (X1..Y1),

sense-Result-velocity         INTEGER (X2..Y2),

sense-Result-degree           INTEGER (X3..Y3),

}
```

It should be noted that, in this embodiment of this application, that the distance information set is {10, 20, 30, ..., 500} is used as an example, and precision and a value range of quantization are not limited in this embodiment of this application. For example, precision and a value range of quantizing the fourth type of measurement result may be determined based on the processing capability of the first device or an actual scenario requirement. For example, the range and the precision of quantizing the fourth type of measurement result may be determined based on a maximum detection distance, angle, speed, detection resolution, or the like that is supported by the first device.

The first device may separately send each type of measurement result in the N types of measurement results to the second device. To be specific, the first device sends a measurement report to the second device N times, and a measurement report sent each time includes one type of measurement result. Alternatively, the first device may send the N types of measurement results to the second device at one time. To be specific, the first device sends a measurement report to the second device once, and the measurement report includes the N types of measurement results. The first device may indicate the reported measurement result to the second device in the bitmap indication manner or the bit status indication manner. Specifically, the following several cases may be included.

Case 1: The first device sends one type of measurement result to the second device. For example, the measurement result reported by the first device to the second device includes m elements. If the bit status indication manner is used, measurement result information may occupy $\left\lceil \log_2^{(M)} \right\rceil$ bits, and m pieces of bit status information is in one-to-one correspondence with the m elements. Alternatively, if the bitmap indication manner is used, measurement result information may occupy m bits, and m bitmaps are in one-to-one correspondence with the m elements. In addition, the first device may further indicate a type of the reported measurement result. For details, refer to related content of the first indication manner and the second indication manner. Details are not described herein again.

Case 2: The first device sends the N types of measurement results to the second device, where N is an integer greater than or equal to 2. For example, a value set of the first type of measurement result in the N types of measurement results includes $M_1$ elements, and a value set of the second type of measurement result includes $M_2$ elements, and by analogy, a value set of the N types of measurement results includes $\{M_1, M_2, ..., M_N\}$ elements.

If the bitmap indication manner is used, the N types of measurement results may be indicated by using N bitmaps, where the N bitmaps are in one-to-one correspondence with the N types of measurement results. A quantity of bits occupied by one bitmap may be a quantity of sub-measurement results included in a corresponding measurement result. A quantity of bits occupied by the N bitmaps is $M_1+M_2+...+M_N$. Alternatively, if the bit status indication manner is used, a response message of a first request message may include N fields, and the N fields are in one-to-one correspondence with the N types of measurement results. In the N fields, a first field corresponding to the first type of measurement result occupies $\left\lceil \log_2^{(M_1)} \right\rceil$ bits, a second field corresponding to the second type of measurement result occupies bits obtained by taking the ceiling of $\{\log_2^{(M_2)}\}$, and by analogy, the N fields include $\left\lceil \log_2^{(M_1)} \right\rceil + \left\lceil \log_2^{(M_2)} \right\rceil ... + \left\lceil \log_2^{(M_N)} \right\rceil$ bits.

In addition to reporting the N types of measurement results, the first device may further indicate a type of the N types of reported measurement results. For details, refer to related content of the first indication manner and the second indication manner. Details are not described herein again.

It should be noted that the types and the quantity of sub-measurement results included in each type of measurement result are not limited in this embodiment of this application. For example, the fourth type of measurement result may further include distance-speed information, and the distance-speed information indicates a pair of the distance information and the speed information that are matched. When reporting the distance information and the speed information to the second device, the first device may separately report the distance information and the speed information.

It may be understood that the measurement result reported by the first device may not meet a requirement of the second device, and is unnecessary for the second device. For example, the second device needs a measurement result that meets a preset condition, but the measurement result reported by the first device does not meet the preset condition. For another example, the measurement result reported by the first device may change slightly in a time period, and reobtaining the measurement result is unnecessary for the second device. That the first device reports, to the second device, a measurement result that is not needed by the second device causes a waste of resource overheads. Therefore, a second measurement reporting method is provided.

FIG. 5 is a schematic flowchart of a second measurement reporting method according to an embodiment of this application. In FIG. 5, an example in which the method is performed by a first device and a second device is used. If this embodiment of this application is applied to the network architecture shown in FIG. 1, the first device described below may be the terminal device in the network architecture shown in FIG. 1, and the second device described below may be the access network device or another terminal device in the network architecture shown in FIG. 1. Alternatively, the first device may be the access network device in the network architecture shown in FIG. 1, and the second device may be an access network device or a core network device. An optional step, namely, a step that is not mandatory, is shown in FIG. 5 by using a dashed line.

S501. A second device sends a first request message to a first device, where the first request message is used to request to report a measurement result for a first signal.

When the second device needs the first device to report the measurement result for the first signal, the second device may send the first request message to the first device. The first device receives the first request message, and reports the measurement result to the second device, to avoid, as much as possible, reporting an unnecessary measurement result to the second device, and therefore reduce resource overheads.

In an example, the first request message may include the foregoing first indication information, where the first indication information indicates the first device to report the measurement result. Alternatively, the first request message includes first indication information, where the first indication information indicates a type of the measurement result that needs to be reported by the first device. In other words, the first device is implicitly indicated, by using the first indication information, to report the measurement result to the second device. Optionally, the first indication information and the first request message are respectively carried in different signaling. In other words, the first request message and the first indication information are two pieces of independent information. For example, the first request message is carried in DCI signaling, and the first indication information is carried in RRC signaling.

The first device receives the first request message, and obtains the measurement result corresponding to the first request message, for example, N types of measurement results. The first device may send the obtained N types of measurement results to the second device. In a possible scenario, the N types of measurement results obtained by the first device are not measurement results expected by the second device. For example, a type of measurement result value expected by the second device is greater than a preset threshold, but a measurement result that is of the type and that is obtained by the first device is less than the preset threshold. If the first device sends the type of measurement result to the second device, the resources are wasted. Therefore, in this embodiment of this application, the first device may feed back, to the second device, whether the measurement result requested by the second device meets a feedback condition. In this way, the second device may determine, based on a feedback of the first device, whether the first device needs to report the measurement result, to reduce the resource overheads as much as possible.

For example, the feedback condition includes that the measurement result is greater than or equal to a reporting threshold. The reporting threshold may be predefined, preconfigured, or indicated by the second device. For the second device, a measurement result less than the reporting threshold may be useless or has no reference value. In this case, the first device does not need to report a measurement result greater than or equal to the reporting threshold, to reduce the resource overheads.

For another example, the feedback condition includes that a change rate of the measurement result is within a preset range, where the change rate of the measurement result is a difference between an $(i+1)^{th}$ measurement result and an $i^{th}$ measurement result, and i is an integer greater than or equal to 1. The change rate of the measurement result is not within the preset range, and it may be considered that some measurement results may be inaccurate measurement results caused by another factor or measurement results whose values do not change greatly. For the second device, a measurement result whose change rate is not within the preset range may be useless or has no reference value. In this case, the first device does not need to report the measurement result whose change rate is not within the preset range, to reduce the resource overheads.

In different scenarios, feedback conditions corresponding to a same type of measurement result may be different. For example, in a highway scenario, a reporting threshold corresponding to a speed may be 100 km/h. In other words, the first device reports a speed greater than or equal to 100 km/h to the second device. If a speed determined by the first device is less than 100 km/h, the first device continues to measure the first signal, and does not send the determined speed to the second device. For another example, in a crossroad scenario, a reporting threshold corresponding to a speed may be 30 km/h. In other words, the first device reports a speed greater than or equal to 30 km/h to the second device. If a speed determined by the first device is less than 30 km/h, the first device continues to measure the first signal, and does not send the determined speed to the second device.

For another example, in a highway scenario, a change rate corresponding to a speed may be 0.1. When the first device determines that a speed of the target object is 100 km/h, and a previous speed of the target object is between 90 km/h and 100 km/h, in other words, a change rate between the current speed and the previous speed of the target object is greater than or equal to 0.1, the first device sends the determined speed to the second device. For another example, in a crossroad scenario, a reporting threshold corresponding to a speed may be 0.15. In other words, the first device reports a speed greater than or equal to 0.15 to the second device. If a speed determined by the first device is less than 0.15, the first device continues to measure the first signal, and does not send the determined speed to the second device. It may be understood that a speed determined by the first device in first measurement may be sent to the second device, and whether to send the speed to the second device does not need to be determined based on the feedback condition.

In a possible implementation, a feedback condition corresponding to each type of measurement result may be predefined or preconfigured. Similarly, a feedback condition of each type of sub-measurement result may be predefined or preconfigured. For example, a reporting threshold of a speed is 100 km/h, a reporting threshold of a distance is 200 m, and a reporting threshold of a target false alarm probability is 0.3.

In a possible implementation, the second device may indicate, to the first device, the feedback condition corresponding to the measurement result that needs to be reported. That is, the second device may perform S502.

S502. The second device sends fourth indication information to the first device, where the fourth indication information indicates feedback conditions respectively corresponding to the N types of measurement results.

The fourth indication information may indicate the feedback conditions respectively corresponding to the N types of measurement results. For example, the fourth indication information may include reporting thresholds respectively corresponding to the N types of measurement results. Alternatively, the fourth indication information may include change rates respectively corresponding to the N types of measurement results. The corresponding feedback condition for each sub-measurement result may be predefined. For example, the reporting threshold of the speed is 100 km/h, the reporting threshold of the distance is 200 m, the reporting threshold of the target false alarm probability is 0.3, that is, {the speed of 100 km/h, the distance of 200 m, and the target false alarm probability of 0.3}, and so on. The fourth indication information may include one or more indexes, and one index corresponds to one reporting threshold. {The speed of 100 km/h, the distance of 200 m, and the target false alarm probability of 0.3} is used as an example. A corresponding index value is of 0 to 2. The fourth indication information includes indexes 1 and 2. In this case, it may indicate that the reporting threshold of the distance is 200 m, and the reporting threshold of the target false alarm probability is 0.3. It should be noted that feedback conditions that are predefined and that correspond to specific sub-measurement results are not limited in this embodiment of this application.

The fourth indication information may be included in the first request message. In other words, the first request message includes the fourth indication information. Alternatively, the fourth indication information and the first request message are independent, in other words, the fourth indication information and the first request message are two pieces of independent signaling. Feedback conditions corresponding to various types of measurement results may be predefined or preconfigured. Therefore, S502 is not a mandatory step, and is shown in FIG. 5 by using the dashed line.

S503. The first device sends second indication information to the second device, and correspondingly, the second device receives the second indication information, where the second indication information may indicate whether the measurement result that the second device needs the first device to report meets the feedback condition.

After obtaining the N types of measurement results, the first device may determine whether the N types of measurement results meet the feedback conditions, and notify the second device of whether the N types of measurement results meet the feedback conditions. For example, the first device may send the second indication information to the second device, to indicate whether the N types of measurement results meet the feedback conditions. In this way, the second device may determine, based on the second indication information, whether the first device needs to report the N types of measurement results, to reduce the resource overheads as much as possible.

The second indication information may indicate whether each type of measurement result in the N types of measurement results meets the feedback condition, and the second device determines a specific type measurement result or specific types of measurement results that need to be reported by the first device. Alternatively, the second indication information may indicate a type of a measurement result that is in the N types of measurement results and that does not meet the feedback condition. Alternatively, the second indication information may indicate a type of a measurement result that is in the N types of measurement results and that meets the feedback condition.

S504. The second device sends third indication information to the first device, and correspondingly, the first device receives the third indication information.

The third indication information may indicate whether the first device reports the measurement result. For example, the third indication information is one-bit information. A value of one bit being "0" indicates that the first device reports the measurement result. A value of the bit being "1" indicates that the first device does not reports the measurement result. Alternatively, after receiving the first request message, if the first device does not receive the third indication information within a preset time period, the first device does not report the measurement result by default. On the contrary, if the first device receives the third indication information within a preset time period, the first device reports the measurement result by default.

For example, if the second indication information indicates that a part or all of the N types of measurement results meet the feedback condition, a value of the third indication information sent by the second device to the first device is 0, that the first device reports the measurement result that meets the feedback condition is triggered. On the contrary, if the second indication information indicates that none of the N types of measurement results meets the feedback condition, and a value of the third indication information sent by the second device is 1, it indicates that the first device does not report the measurement result. Alternatively, the second device does not send third indication information.

S505. The first device sends a response message to the second device.

The first device receives the third indication information, and sends the response message for the first request message to the second device. In other words, the first device reports the measurement result to the second device. Correspondingly, the second device receives the response message for the first request message. The response message may include the measurement result that meets the feedback condition. For example, if the N types of measurement results all meet the feedback conditions, the response message may include the N types of measurement results. For a specific implementation of the response message, refer to related content of S403. Details are not described herein again.

It should be noted that, after receiving the first request message, the first device may directly send the response message to the second device. In other words, S503 is not mandatory, and is an optional step. In this case, the response message may include the measurement result that meets the feedback condition. For example, the measurement result that meets the feedback condition is K types of measurement results in the N types of measurement results, and the response message for the first request message may include the K types of measurement results. Alternatively, the response message may include the N types of measurement results that are requested by the second device and the second indication information. The second device receives the response message, and may determine, based on the second indication information, whether to use the N types of measurement results to determine attribute information of the target object. For example, if none of the N types of measurement results meets the feedback condition, the second device may consider that accuracy of the attribute information that is of the target object and that is determined based on the N types of measurement results is poor, and the second device abandons determining the attribute information of the target object based on the N types of measurement results. The second device may re-request the first device to request to obtain a measurement result for the first signal. Certainly, the second device may alternatively re-indicate, to the first device, feedback conditions respectively corresponding to measurement results that need to be obtained.

It should be noted that procedures shown in FIG. 4 and FIG. 5 may be combined. For example, the following steps may be performed: S501, S401, S402, and S403, where S402 is an optional step. Alternatively, the following steps may be performed: S501, S401, S502, S503, S504, and S505, where S502 is an optional step.

In an embodiment of this application, a first device determines M types of measurement results for a first signal, and reports N types of measurement results in the M types of measurement results to a second device. In this way, the second device can effectively obtain attribute information, such as a distance, a speed, and an angle, of a target object in a detection link based on the N types of measurement results. This helps evaluate detection performance and estimation performance of a sensing system, so that sensing performance of the sensing system can be improved.

The first device may be a sensing device, or may be a non-sensing device. For example, the first device is the sensing device, and may receive the first signal, measure the first signal, and obtain the M types of measurement results for the first signal. For another example, the first device is the non-sensing device, and may obtain the M types of measurement results for the first signal from a sensing device. In other words, in this embodiment of this application, the measurement result of the first signal may be exchanged between different devices, for example, exchanged between the first device and the second device. For example, the following four scenarios may be included. In the following four scenarios, a first terminal device may be a sensing device. A second terminal device may be a sensing device, or may be a non-sensing device.

In a first scenario, the first device is a first terminal device, and the second device is a first access network device. The first terminal device is a device for detecting the target object. For example, in an active sensing scenario, the first terminal device may send a sensing signal. In this scenario, after determining the M types of measurement results of the first signal, the first terminal device may send the N types of measurement results to the first access network device. The first access network device coordinates, based on the N types of measurement results, a factor that interferes with the target object in an environment. For example, the target object is a vehicle, and the N types of measurement results reported by the first terminal device include a fourth type of measurement result. The first access network device may receive measurement results reported by a plurality of first terminal devices, to determine speeds, distances, angles, and the like of the plurality of vehicles. The first access network device may adjust the speeds, the angles, and the like of the plurality of vehicles, to reduce, as much as possible, a probability that the plurality of vehicles collide.

In a second scenario, the first device is a first terminal device, and the second device is a second terminal device. The first terminal device is a device for detecting the target object, and the second terminal device may also be a device for detecting the target object. After determining the M types of measurement results of the first signal, the first terminal device may send the N types of measurement results to the second terminal device. The second terminal device determines the attribute information of the target object based on the N types of measurement results and with reference to a measurement result determined by the second terminal device. This is more accurate.

In a third scenario, the first device is a first access network device, and the second device is a second access network device. The first access network device may be considered as an access network device that is closer to a sensing device, and relatively, the second access network device is an access network device that is farther away from the sensing device. When needing to obtain a sensing result that is of the sensing device and that is for the target object, the second access network device may obtain the sensing result via the first access network device. For example, the sensing device determines the M types of measurement results for the first signal, and sends the N types of measurement results to the first access network device. The first access network device may send the N types of measurement results to the second access network device.

In a fourth scenario, the first device is an access network device, and the second device is a core network device. It is similar to the third scenario that the access network device obtains, from the sensing device, the N types of measurement results for the first signal, and may forward the N types of results to the core network device.

In this embodiment of this application, devices may exchange a measurement result of a signal used to detect a target object or a spatial channel. This helps evaluate detection performance and estimation performance of a detecting link, to improve performance of a detecting system. In addition, when processing complexity of a sensing device is low, an attribute of the target object or the spatial channel can be indirectly determined via another device.

In embodiments provided in this application, the methods provided in embodiments of this application are separately described from a perspective of interaction between the first device and the second device. To implement functions in the foregoing methods provided in embodiments of this application, the first device and the second device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

Based on a same concept as the method embodiments, an embodiment of this application provides a communication apparatus. The following describes, with reference to the accompanying drawings, communication apparatuses configured to implement the methods in embodiments of this application.

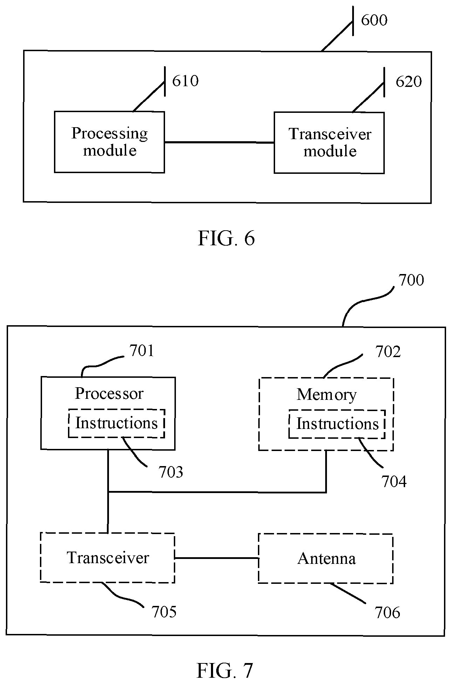

FIG. 6 is a block diagram of a communication apparatus 600 according to an embodiment of this application. The communication apparatus 600 may include a processing module 610 and a transceiver module 620. Optionally, a storage unit may be included. The storage unit may be configured to store instructions (code or a program) and/or data. The processing module 610 and the transceiver module 620 may be coupled to the storage unit. For example, the processing module 610 may read the instructions (the code or the program) and/or the data in the storage unit, to implement a corresponding method. The modules may be disposed independently, or may be partially or completely integrated.

In some possible implementations, the communication apparatus 600 can correspondingly implement behavior and functions of the first device in the foregoing method embodiments. The communication apparatus 600 may be a first device, or may be a component (for example, a chip or a circuit) used in the first device, or may be the chip or a chip group in the first device, or a part of the chip that is configured to perform a related method function. In some other possible implementations, the communication apparatus 600 can correspondingly implement behavior and functions of the second device in the foregoing method embodiments. The communication apparatus 600 may be a second device, or may be a component (for example, a chip or a circuit) used in the second device, or may be the chip or a chip group in the second device, or a part of the chip that is configured to perform a related method function.

For example, the communication apparatus 600 implements the method performed by the first device in the embodiment in FIG. 4 or FIG. 5. The processing module 610 is configured to obtain M types of measurement results for a first signal, where the first signal is used to detect a target object or a spatial channel. The transceiver module 620 is configured to send N types of measurement results in the M types of measurement results to a second device, where M and N are positive integers, and N is less than or equal to M.

In an optional implementation, the M types of measurement results include one or more of the following: a first type of measurement result, a second type of measurement result, a third type of measurement result, or a fourth type of measurement result. The first type of measurement result includes information about the first signal and/or information about the spatial channel, and the information about the spatial channel indicates a feature of the spatial channel corresponding to the first signal. The second type of measurement result includes one or more of the following: a time domain measurement result, a space domain measurement result, or a frequency domain measurement result. The time domain measurement result indicates speed information of the target object, the space domain measurement result indicates angle information of the target object, and the frequency domain measurement result indicates distance information of the target object. The third type of measurement result includes one or more of the following: a target detection probability, a target false alarm probability, a target missed detection probability, first information, or a channel quality indicator. The target detection probability is a probability of detecting the target object. The target false alarm probability is a probability that a target object that actually does not exist is determined as a target object that exists. The target missed detection probability is a probability that no target object that actually exists is detected. The first information indicates whether the target object is detected. The channel quality indicator indicates quality of the spatial channel corresponding to the first signal. The fourth type of measurement result includes one or more of the following: the speed information, the angle information, or the distance information of the target object.

In an optional implementation, the communication apparatus 600 is a first terminal device, and the second device is a second terminal device or an access network device. The communication apparatus 600 is a first access network device, and the second device is a core network device, a second access network device, or a terminal device.

In an optional implementation, the transceiver module 620 is further configured to receive first indication information, where the first indication information indicates a type of a measurement result that needs to be reported.

In an optional implementation, the transceiver module 620 is further configured to receive a first request message, and send a response message. The first request message is used to request to report the measurement result for the first signal, and the response message includes the N types of measurement results.

In an optional implementation, the transceiver module 620 is further configured to send second indication information to the second device, where the second indication information indicates whether a feedback condition is met.

In an optional implementation, before the transceiver module 620 sends the response message, the transceiver module 620 is further configured to receive third indication information, where the third indication information is used to trigger reporting of the measurement result.

In an optional implementation, the feedback condition includes that the measurement result is greater than or equal to a reporting threshold. Alternatively, the feedback condition includes that a change rate of the measurement result is within a preset range. The change rate of the measurement result is a difference between an $(i+1)^{th}$ measurement result and an $i^{th}$ measurement result, and i is an integer greater than or equal to 1.

In an optional implementation, the transceiver module 620 is further configured to receive fourth indication information, where the fourth indication information indicates the reporting threshold or the change rate of the measurement result, the reporting threshold includes reporting thresholds respectively corresponding to the N types of measurement results, and the change rate of the measurement result includes change rates respectively corresponding to the N types of measurement results.

For another example, the communication apparatus 600 implements the method performed by the second device in the embodiment in FIG. 4 or FIG. 5. The transceiver module 620 is configured to receive N types of measurement results from a first device, where the N types of measurement results belong to M types of measurement results for a first signal, the first signal is used to detect a target object or a spatial channel, M and N are positive integers, and N is less than or equal to M. The processing module 610 is configured to determine attribute information of the target object or the spatial channel based on the N types of measurement results.

In an optional implementation, the M types of measurement results include one or more of the following: a first type of measurement result, a second type of measurement result, a third type of measurement result, or a fourth type of measurement result. The first type of measurement result includes information about the first signal and/or information about the spatial channel, and the information about the spatial channel indicates a feature of the spatial channel corresponding to the first signal. The second type of measurement result includes one or more of the following: a time domain measurement result, a space domain measurement result, or a frequency domain measurement result. The time domain measurement result indicates speed information of the target object, the space domain measurement result indicates angle information of the target object, and the frequency domain measurement result indicates distance information of the target object. The third type of measurement result includes one or more of the following: a target detection probability, a target false alarm probability, a target missed detection probability, first information, or a channel quality indicator. The target detection probability is a probability of detecting the target object that exists. The target false alarm probability is a probability that a target object that actually does not exist is determined as a target object that exists. The target missed detection probability is a probability that no target object that actually exists is detected. The first information indicates whether the target object is detected. The channel quality indicator indicates quality of the spatial channel corresponding to the first signal. The fourth type of measurement result includes one or more of the following: the speed information, the angle information, or the distance information of the target object.

In an optional implementation, the first device is a first terminal device, and the communication apparatus 600 is a second terminal device or a first access network device; or the first device is a first access network device, and the communication apparatus 600 is a second access network device, a core network device, or a terminal device.

In an optional implementation, the transceiver module 620 is further configured to send first indication information, where the first indication information indicates a type of a measurement result that needs to be reported.

In an optional implementation, the transceiver module 620 is further configured to send a first request message, and receive a response message. The first request message is used to request to report the measurement result for the first signal, and the response message includes the N types of measurement results.

In an optional implementation, the transceiver module 620 is further configured to receive second indication information from the first device, where the second indication information indicates whether a feedback condition is met.

In an optional implementation, before the transceiver module 620 receives the response message for the first request message, the transceiver module 620 is further configured to send third indication information, where the third indication information is used to trigger reporting of the measurement result.

In an optional implementation, the feedback condition includes that the measurement result is greater than or equal to a reporting threshold. Alternatively, the feedback condition includes that a change rate of the measurement result is within a preset range, where the change rate of the measurement result is a difference between an $(i+1)^{th}$ measurement result and an $i^{th}$ measurement result, and i is an integer greater than or equal to 1.

In an optional implementation, the transceiver module 620 is further configured to send fourth indication information, where the fourth indication information indicates the reporting threshold or the change rate of the measurement result, the reporting threshold includes reporting thresholds respectively corresponding to the N types of measurement results, and the change rate of the measurement result includes change rates respectively corresponding to the N types of measurement results.

FIG. 7 is a block diagram of a communication apparatus 700 according to an embodiment of this application. The communication apparatus 700 may be a terminal device, and can implement a function of the first device or the second device in the method provided in embodiments of this application. Alternatively, the communication apparatus 700 may be an apparatus that can support the first device or the second device in implementing a corresponding function in the method provided in embodiments of this application. The communication apparatus 700 may be a chip system. In embodiments of this application, the chip system may include a chip, or may include the chip and another discrete device. For a specific function, refer to the descriptions in the foregoing method embodiments.

The communication apparatus 700 includes one or more processors 701, configured to implement or support the communication apparatus 700 in implementing the function of the first device or the second device in the method provided in embodiments of this application. For details, refer to the detailed descriptions in the method example. Details are not described herein again. The processor 701 may also be referred to as a processing unit or a processing module, and can implement a specific control function. The processor 701 may be a general-purpose processor, a dedicated processor, or the like. For example, the processor includes a central processing unit, an application processor, a modem processor, a graphics processor, an image signal processor, a digital signal processor, a video codec processor, a controller, a memory, and/or a neural network processor. The central processing unit may be configured to control the communication apparatus 700, perform a software program, and/or process data. Different processors may be independent devices, or may be integrated into one or more processors, for example, integrated into one or more application-specific integrated circuits.

Optionally, the communication apparatus 700 includes one or more memories 702, configured to store instructions 704. The instructions may be run on the processor 701, to enable the communication apparatus 700 to perform the method described in the foregoing method embodiment. The memory 702 and the processor 701 may be separately disposed, or may be integrated, or it may be considered that the memory 702 and the processor 701 are coupled. The coupling in embodiments of this application is an indirect coupling or a communication connection between apparatuses, units, or modules in an electrical form, a mechanical form, or another form, and is used for information exchange between the apparatuses, the units, or the modules. The processor 701 may operate cooperatively with the memory 702. At least one of the at least one memory may be included in the processor. It should be noted that the memory 702 is not necessary, and therefore, is illustrated by using a dashed line in FIG. 7.

Optionally, the memory 702 may further store data. The processor and the memory may be separately disposed, or may be integrated together. In embodiments of this application, the memory 702 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited herein. The memory in embodiments of this application may alternatively be a circuit or any other apparatus that can implement a storage function, and is configured to store the program instructions and/or the data.

Optionally, the communication apparatus 700 may include instructions 703 (sometimes referred to as code or a program), and the instructions 703 may be run on the processor, to enable the communication apparatus 700 to perform the method described in the foregoing embodiment. The processor 701 may store the data.

Optionally, the communication apparatus 700 may further include a transceiver 705 and an antenna 706. The transceiver 705 may be referred to as a transceiver unit, a transceiver module, a transceiver machine, a transceiver circuit, a transceiver, an input/output interface, or the like, and is configured to implement a transceiver function of the communication apparatus 700 through the antenna 706.

The processor 701 and the transceiver 705 described in this application may be implemented in an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 700 may include more or fewer components, or some components may be integrated, or some components may be split. These components may be implemented by hardware, software, or a combination of software and hardware.

It should be noted that the communication apparatus in the foregoing embodiments may be a first terminal device (or a network device), may be a circuit, may be a chip used in the first terminal device (or the network device), or may be another combined device, component, or the like that has a function of the first terminal (or the network device). When the communication apparatus is the first terminal device (or the network device), the transceiver module may be the transceiver, and may include an antenna, a radio frequency circuit, and the like, and the processing module may be the processor, for example, a central processing module (central processing unit, CPU). When the communication apparatus is the component having the function of the first terminal device (or the network device), the transceiver module may be a radio frequency unit, and the processing module may be the processor. When the communication apparatus is a chip system, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processing circuit (digital signal processor, DSP), a microcontroller (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first device and at least one second device, or may include an access network device and/or a core network device. For example, the communication system includes a first device and a second device that are configured to implement related functions in FIG. 4 or FIG. 5. For details, refer to the related descriptions in the method embodiments. Details are not described herein again.

An embodiment of this application further provides a computer-readable storage medium, including instructions. When the instructions are run on a computer, the computer is enabled to perform the method performed by the first device in FIG. 4 or FIG. 5. Alternatively, when the instructions are run on a computer, the computer is enabled to perform the method performed by the second device in FIG. 4 or FIG. 5.

An embodiment of this application further provides a computer program product, including instructions. When the instructions are run on a computer, the computer is enabled to perform the method performed by the first device in FIG. 4 or FIG. 5. Alternatively, when the instructions are run on a computer, the computer is enabled to perform the method performed by the second device in FIG. 4 or FIG. 5.

An embodiment of this application provides a chip system. The chip system includes a processor, and may further include a memory, configured to implement a function of the first device in the foregoing method, or configured to implement a function of the second device in the foregoing method. The chip system may include a chip, or may include the chip and another discrete device.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification may be implemented by electronic hardware or a combination of computer software and electronic hardware. Whether these functions are performed by hardware or software depends on particular applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments provided in this application, it should be understood that the disclosed system, apparatus, and method may be implemented in another manner. For example, the described apparatus embodiments are only examples. For example, division into the units is only logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, and may be located in one location, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art may make various modifications and variations to this application. If these modifications and variations of this application fall within the scope of the claims of this application and equivalent technologies thereof, this application is also intended to cover these modifications and variations.

**Claims**

1. A measurement reporting method, comprising:

   obtaining, by a first device, M types of measurement results for a first signal, wherein the first signal is used to detect a target object or a spatial channel; and
   sending, by the first device, N types of measurement results in the M types of measurement results to a second device, wherein M and N are positive integers, and N is less than or equal to M.

2. The method according to claim 1, wherein the M types of measurement results comprise one or more of the following:

   a first type of measurement result, comprising information about the first signal and/or information about the spatial channel, wherein the information about the spatial channel indicates a feature of the spatial channel corresponding to the first signal;
   a second type of measurement result, comprising one or more of the following: a time domain measurement result, a space domain measurement result, or a frequency domain measurement result, wherein the time domain measurement result indicates speed information of the target object, the space domain measurement result indicates angle information of the target object, and the frequency domain measurement result indicates distance information of the target object;
   a third type of measurement result, comprising one or more of the following: a target detection probability, a target false alarm probability, a target missed detection probability, first information, or a channel quality indicator, wherein the target detection probability is a probability that the target object is detected, the target false alarm probability is a probability that a target object that actually does not exist is determined as a target object that exists, the target missed detection probability is a probability that no target object that actually exists is detected, the first information indicates whether the target object is detected, and the channel quality indicator indicates quality of the spatial channel corresponding to the first signal; and

a fourth type of measurement result, comprising one or more of the following: the speed information, the angle information, or the distance information of the target object.

3. The method according to claim 1 or 2, wherein the first device is a first terminal device, and the second device is a second terminal device or an access network device; or the first device is a first access network device, and the second device is a core network device, a second access network device, or a terminal device.

4. The method according to any one of claims 1 to 3, wherein the method further comprises: receiving, by the first device, first indication information, wherein the first indication information indicates a type of a measurement result that needs to be reported.

5. The method according to any one of claims 1 to 4, wherein the method further comprises:

receiving, by the first device, a first request message, wherein the first request message is used to request to report the measurement result for the first signal; and

sending, by the first device, a response message, wherein the response message comprises the N types of measurement results.

6. The method according to claim 5, wherein the method further comprises:
sending, by the first device, second indication information to the second device, wherein the second indication information indicates whether a feedback condition is met.

7. The method according to claim 5 or 6, wherein before the sending, by the first device, a response message, the method further comprises:
receiving, by the first device, third indication information, wherein the third indication information is used to trigger reporting of the measurement result.

8. The method according to claim 6 or 7, wherein the feedback condition comprises that the measurement result is greater than or equal to a reporting threshold, or the feedback condition comprises that a change rate of the measurement result is within a preset range, wherein the change rate of the measurement result is a difference between an $(i+1)^{th}$ measurement result and an $i^{th}$ measurement result, and i is an integer greater than or equal to 1.

9. The method according to claim 8, wherein the method further comprises:
receiving, by the first device, fourth indication information, wherein the fourth indication information indicates the reporting threshold or the change rate of the measurement result, the reporting threshold comprises reporting thresholds respectively corresponding to the N types of measurement results, and the change rate of the measurement result comprises change rates respectively corresponding to the N types of measurement results.

10. A measurement reporting method, comprising:

receiving, by a second device, N types of measurement results from a first device, wherein the N types of measurement results belong to M types of measurement results for a first signal, the first signal is used to detect a target object or a spatial channel, M and N are positive integers, and N is less than or equal to M; and
determining attribute information of the target object or the spatial channel based on the N types of measurement results.

11. The method according to claim 10, wherein the M types of measurement results comprise one or more of the following:

a first type of measurement result, comprising information about the first signal and/or information about the spatial channel, wherein the information about the spatial channel indicates a feature of the spatial channel corresponding to the first signal;
a second type of measurement result, comprising one or more of the following: a time domain measurement result, a space domain measurement result, or a frequency domain measurement result, wherein the time domain measurement result indicates speed information of the target object, the space domain measurement result indicates angle information of the target object, and the frequency domain measurement result indicates distance information of the target object;

a third type of measurement result, comprising one or more of the following: a target detection probability, a target false alarm probability, a target missed detection probability, first information, or a channel quality indicator, wherein the target detection probability is a probability that the target object is detected, the target false alarm probability is a probability that a target object that actually does not exist is determined as a target object that exists, the target missed detection probability is a probability that no target object that actually exists is detected, the first information indicates whether the target object is detected, and the channel quality indicator indicates quality of the spatial channel corresponding to the first signal; and

a fourth type of measurement result, comprising one or more of the following: the speed information, the angle information, or the distance information of the target object.

12. The method according to claim 10 or 11, wherein the first device is a first terminal device, and the second device is a second terminal device or a first access network device; or the first device is a first access network device, and the second device is a second access network device, a core network device, or a terminal device.

13. The method according to any one of claims 10 to 12, wherein the method further comprises:
sending, by the second device, first indication information, wherein the first indication information indicates a type of a measurement result that needs to be reported.

14. The method according to any one of claims 10 to 13, wherein the method further comprises:

sending, by the second device, a first request message, wherein the first request message is used to request to report the measurement result for the first signal; and
receiving, by the second device, a response message, wherein the response message comprises the N types of measurement results.

15. The method according to claim 14, wherein the method further comprises:
receiving, by the second device, second indication information from the first device, wherein the second indication information indicates whether a feedback condition is met.

16. The method according to claim 14 or 15, wherein before the receiving, by the second device, a response message, the method further comprises:
sending, by the second device, third indication information, wherein the third indication information is used to trigger reporting of the measurement result.

17. The method according to claim 15 or 16, wherein the feedback condition comprises that the measurement result is greater than or equal to a reporting threshold, or the feedback condition comprises that a change rate of the measurement result is within a preset range, wherein the change rate of the measurement result is a difference between an $(i+1)^{th}$ measurement result and an $i^{th}$ measurement result, and i is an integer greater than or equal to 1.

18. The method according to claim 17, wherein the method further comprises:

sending, by the second device, fourth indication information, wherein the fourth indication information indicates the reporting threshold or the change rate of the measurement result, wherein
the reporting threshold comprises reporting thresholds respectively corresponding to the N types of measurement results, and the change rate of the measurement result comprises change rates respectively corresponding to the N types of measurement results.

19. A communication apparatus, comprising a processing module and a transceiver module, wherein

the processing module is configured to obtain M types of measurement results for a first signal, wherein the first signal is used to detect a target object or a spatial channel; and
the transceiver module is configured to send N types of measurement results in the M types of measurement results to a second device, wherein M and N are positive integers, and N is less than or equal to M.

20. The apparatus according to claim 19, wherein the M types of measurement results comprise one or more of the following:

a first type of measurement result, comprising information about the first signal and/or information about the spatial channel, wherein the information about the spatial channel indicates a feature of the spatial channel corresponding to the first signal;

a second type of measurement result, comprising one or more of the following: a time domain measurement result, a space domain measurement result, or a frequency domain measurement result, wherein the time domain measurement result indicates speed information of the target object, the space domain measurement result indicates angle information of the target object, and the frequency domain measurement result indicates distance information of the target object;

a third type of measurement result, comprising one or more of the following: a target detection probability, a target false alarm probability, a target missed detection probability, first information, or a channel quality indicator, wherein the target detection probability is a probability that the target object is detected, the target false alarm probability is a probability that a target object that actually does not exist is determined as a target object that exists, the target missed detection probability is a probability that no target object that actually exists is detected, and the first information indicates whether the target object is detected; and

a fourth type of measurement result, comprising one or more of the following: the speed information, the angle information, or the distance information of the target object.

21. The apparatus according to claim 19 or 20, wherein the communication apparatus is a first terminal device, and the second device is a second terminal device or an access network device; or the communication apparatus is a first access network device, and the second device is a core network device, a second access network device, or a terminal device.

22. The apparatus according to any one of claims 19 to 21, wherein the transceiver module is further configured to:
receive first indication information, wherein the first indication information indicates a type of a measurement result that needs to be reported.

23. The apparatus according to any one of claims 19 to 22, wherein the transceiver module is further configured to:

receive a first request message, wherein the first request message is used to request to report the measurement result for the first signal; and
send a response message, wherein the response message comprises the N types of measurement results.

24. The apparatus according to claim 23, wherein the transceiver module is further configured to:
send second indication information to the second device, wherein the second indication information indicates whether a feedback condition is met.

25. The apparatus according to claim 23 or 24, wherein before the communication apparatus sends the response message, the transceiver module is further configured to:
receive third indication information, wherein the third indication information is used to trigger reporting of the measurement result.

26. The apparatus according to claim 24 or 25, wherein the feedback condition comprises that the measurement result is greater than or equal to a reporting threshold, or the feedback condition comprises that a change rate of the measurement result is within a preset range, wherein the change rate of the measurement result is a difference between an $(i+1)^{th}$ measurement result and an $i^{th}$ measurement result, and i is an integer greater than or equal to 1.

27. The apparatus according to claim 26, wherein the transceiver module is further configured to:
receive fourth indication information, wherein the fourth indication information indicates the reporting threshold or the change rate of the measurement result, the reporting threshold comprises reporting thresholds respectively corresponding to the N types of measurement results, and the change rate of the measurement result comprises change rates respectively corresponding to the N types of measurement results.

28. A communication apparatus, comprising a processing module and a transceiver module, wherein

the transceiver module is configured to receive N types of measurement results from a first device, wherein the N types of measurement results belong to M types of measurement results for a first signal, the first signal is used to detect a target object or a spatial channel, M and N are positive integers, and N is less than or equal to M; and

the processing module is configured to determine attribute information of the target object or the spatial channel based on the N types of measurement results.

29. The apparatus according to claim 28, wherein the M types of measurement results comprise one or more of the following:

a first type of measurement result, comprising information about the first signal and/or information about the spatial channel, wherein the information about the spatial channel indicates a feature of the spatial channel corresponding to the first signal;

a second type of measurement result, comprising one or more of the following: a time domain measurement result, a space domain measurement result, or a frequency domain measurement result, wherein the time domain measurement result indicates speed information of the target object, the space domain measurement result indicates angle information of the target object, and the frequency domain measurement result indicates distance information of the target object;

a third type of measurement result, comprising one or more of the following: a target detection probability, a target false alarm probability, a target missed detection probability, first information, or a channel quality indicator, wherein the target detection probability is a probability that the target object is detected, the target false alarm probability is a probability that a target object that actually does not exist is determined as a target object that exists, the target missed detection probability is a probability that no target object that actually exists is detected, the first information indicates whether the target object is detected, and the channel quality indicator indicates quality of the spatial channel corresponding to the first signal; and

a fourth type of measurement result, comprising one or more of the following: the speed information, the angle information, or the distance information of the target object.

30. The apparatus according to claim 28 or 29, wherein the first device is a first terminal device, and the communication apparatus is a second terminal device or a first access network device; or the first device is a first access network device, and the communication apparatus is a second access network device, a core network device, or a terminal device.

31. The apparatus according to any one of claims 28 to 30, wherein the transceiver module is further configured to: send first indication information, wherein the first indication information indicates a type of a measurement result that needs to be reported.

32. The apparatus according to any one of claims 28 to 31, wherein the transceiver module is further configured to:

send a first request message, wherein the first request message is used to request to report the measurement result for the first signal; and

receive a response message, wherein the response message comprises the N types of measurement results.

33. The apparatus according to claim 32, wherein the transceiver module is further configured to: receive second indication information from the first device, wherein the second indication information indicates whether a feedback condition is met.

34. The apparatus according to claim 32 or 33, wherein before the communication apparatus receives the response message, the transceiver module is further configured to: send third indication information, wherein the third indication information is used to trigger reporting of the measurement result.

35. The apparatus according to claim 33 or 34, wherein the feedback condition comprises that the measurement result is greater than or equal to a reporting threshold, or the feedback condition comprises that a change rate of the measurement result is within a preset range, wherein the change rate of the measurement result is a difference between an $(i+1)^{th}$ measurement result and an $i^{th}$ measurement result, and i is an integer greater than or equal to 1.

36. The apparatus according to claim 35, wherein the transceiver module is further configured to: send fourth indication information, wherein the fourth indication information indicates the reporting threshold or the change rate of the measurement result, the reporting threshold comprises reporting thresholds respectively corresponding to the N types of measurement results, and the change rate of the measurement result comprises change rates respectively corresponding to the N types of measurement results.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 9 by using a logic circuit or executing code instructions.

38. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 10 to 18 by using a logic circuit or executing code instructions.

39. A computer-readable storage medium, wherein the computer-readable storage medium stores computer instructions, and when the computer instructions are executed, a computer is enabled to perform the method according to any one of claims 1 to 9, or perform the method according to any one of claims 10 to 18.

40. A computer program product, wherein the computer program product comprises a computer program, and when the computer program is run, the method according to any one of claims 1 to 9 is performed, or the method according to any one of claims 10 to 18 is performed.

Communication
signal

Sensing
signal

FIG. 1

Sensing device

Echo
signal

Communication
signal

Sensing
signal

Sensed target

Access network
device

FIG. 2

Sensing
device

Signal in an
environment

Communication
signal

Sensed target

Access network
device          (a)

Sensing device

Signal in an
environment

Communication
signal

Sensed
target

Access network
device

(b)

FIG. 3

```
┌─────────────┐                                    ┌──────────┐
│ First device│                                    │  Second  │
│             │                                    │  device  │
└──────┬──────┘                                    └────┬─────┘
       │                                                │
┌──────┴──────────────────────────┐    S401            │
│ Obtain M types of measurement    │  ⌇~⌇               │
│ results for a first signal, where M is an │          │
│ integer greater than or equal to 1 │               │
└──────┬──────────────────────────┘                    │
       │                                                │
       │  S402. First indication information, where the │
       │  first indication information indicates a type of │
       │  a measurement result that needs to be reported │
       │ ◄─────────────────────────────────────────────│
       │                                                │
       │  S403. N types of measurement results in       │
       │        the M types of measurement results      │
       │───────────────────────────────────────────────►│
       │                                                │
```

FIG. 4

```
┌─────────────┐                                    ┌──────────┐
│ First device│                                    │  Second  │
│             │                                    │  device  │
└──────┬──────┘                                    └────┬─────┘
       │  S501. First request message, where the first  │
       │  request message is used to request to report a │
       │       measurement result for a first signal    │
       │ ◄──────────────────────────────────────────────│
       │  S502. Fourth indication information, where the │
       │  fourth indication information indicates feedback │
       │  conditions respectively corresponding to N    │
       │         types of measurement results           │
       │ ◄─ ─ ─ ─ ─ ─ ─ ─ ─ ─ ─ ─ ─ ─ ─ ─ ─ ─ ─ ─ ─ ─ │
       │  S503. Second indication information, where the │
       │  second indication information indicates whether the │
       │          feedback condition is met             │
       │ ─ ─ ─ ─ ─ ─ ─ ─ ─ ─ ─ ─ ─ ─ ─ ─ ─ ─ ─ ─ ─ ─ ►│
       │  S504. Third indication information, where the  │
       │  third indication information is used to trigger │
       │       reporting of the measurement result      │
       │ ◄─ ─ ─ ─ ─ ─ ─ ─ ─ ─ ─ ─ ─ ─ ─ ─ ─ ─ ─ ─ ─ ─ │
       │        S505. Response message                  │
       │───────────────────────────────────────────────►│
       │                                                │
```

FIG. 5

600

610

620

Processing module

Transceiver module

FIG. 6

700

701

702

Processor

Instructions

Memory

Instructions

703

704

Transceiver

Antenna

705

706

FIG. 7

## INTERNATIONAL SEARCH REPORT

| International application No. |
|---|
| **PCT/CN2023/071800** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, CNKI, ENTXTC, WPABSC, VEN: 感知, 无线, 检测, 估计, 测量, 探测, 回波, 反射, 种类, 类型, 上报, 反馈, 报告, 结果, 计算, 处理, 粒度, 能力, 部分, 某些, 目标, 物体, 空间信道, 空域, 频域, sensing, wireless, detect, estimate, measurement, echo, reflect, kind, type, report, feedback, result, compute, process, granularity, capability, part, target, object, spatial channel, domain, frequency

### C. DOCUMENTS CONSIDERED TO BE RELEVANT

| Category* | Citation of document, with indication, where appropriate, of the relevant passages | Relevant to claim No. |
|---|---|---|
| X | CN 108810967 A (HUAWEI TECHNOLOGIES CO., LTD.) 13 November 2018 (2018-11-13) description, paragraphs 68-78 and 120-226 | 1-40 |
| A | CN 112738758 A (CHENGDU XGIMI TECHNOLOGY CO., LTD.) 30 April 2021 (2021-04-30) entire document | 1-40 |
| A | CN 113676930 A (HUAWEI TECHNOLOGIES CO., LTD.) 19 November 2021 (2021-11-19) entire document | 1-40 |
| A | WO 2021204121 A1 (ZTE CORP.) 14 October 2021 (2021-10-14) entire document | 1-40 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2023** | **21 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071800**

| Patent document cited in search report | | | Publication date (day/month/year) | Patent family member(s) | | | Publication date (day/month/year) |
|---|---|---|---|---|---|---|---|
| CN | 108810967 | A | 13 November 2018 | BR | 112019023213 | A2 | 26 May 2020 |
| | | | | WO | 2018202191 | A1 | 08 November 2018 |
| | | | | US | 2020068422 | A1 | 27 February 2020 |
| | | | | EP | 3618491 | A1 | 04 March 2020 |
| CN | 112738758 | A | 30 April 2021 | | None | | |
| CN | 113676930 | A | 19 November 2021 | WO | 2021228095 | A1 | 18 November 2021 |
| | | | | KR | 20230007507 | A | 12 January 2023 |
| | | | | EP | 4138440 | A1 | 22 February 2023 |
| WO | 2021204121 | A1 | 14 October 2021 | US | 2023052779 | A1 | 16 February 2023 |
| | | | | KR | 20220130763 | A | 27 September 2022 |
| | | | | EP | 4135390 | A1 | 15 February 2023 |
| | | | | CN | 111901822 | A | 06 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210061984